# EUROPEAN PATENT APPLICATION

(11) **EP 4 848 229 A1**
(43) Date of publication of application: **02.12.2026**
(21) Application number: 26181901.5
(22) Date of filing: 29.05.2026
(51) Int. Cl.: G06V 20/52, G06V 10/82, G06V 20/40, G06V 20/70

(54) **SYSTEM AND METHOD FOR VIDEO SURVEILLANCE RULE GENERATION**

(30) Priority: 29.05.2025 US 202563814090 P; 28.05.2026 US 202619691312
(71) Applicant: Tyco Fire & Security GmbH, 8212 Neuhausen am Rheinfall (CH)
(72) Inventor: ARSLAN, Abdullah Tugay, Newtownabbey (GB); BUCZMA, Amadeusz, Bangor (GB); MURTAGH, Bryan Robert, Bangor (GB); BURNS, Vincent Patrick, Belfast, BT53 8XE (GB)
(74) Representative: Meissner Bolte Nürnberg

(57) **Abstract**

A system and method for automated video surveillance rule generation. A processing circuit receives a data stream from a camera and analyzes the data stream using an AI based Large Vision-Language Model (LVLM) comprising an image encoder, a projection layer, and a large language model backbone to determine context of a monitored environment. The processing circuit generates surveillance rules based on the context and applies the rules to detect security events. The system provides three input pathways: context derived from the data stream, supplemental context data including policy documents, safety regulations, building diagrams, and CAD designs, and conversational user input via a natural language interface with session state management. A change condition comprising event detection, periodic re-evaluation, new data source introduction, supplemental data updates, or context change beyond a threshold triggers updated context determination and rule generation, enabling continuous adaptive refinement without manual reconfiguration.

## Description

This application claims the benefit of U.S. Provisional Application No. 63/814090, filed May 29, 2025, entitled "System and Method for Video Surveillance Rule Generation," the entire disclosure of which is incorporated herein by reference.

The present disclosure relates generally to security systems. More particularly, the present disclosure relates to generating video surveillance rules for security systems.

Security systems deploy multiple cameras across an environment for surveillance. Such cameras capture live footage of the environment which is monitored manually by security system users. Traditional security systems often require a large number of highly trained users to analyze footage received from multiple cameras and configure each camera individually with site-specific detection rules - a process that scales linearly with the number of deployed cameras and demands specialized security expertise. Apart from this, some conventional security systems rely on fixed predefined rulesets or pre-labeled datasets to analyze video feeds and lack the capability to adapt to diverse or changing environments. When such systems are deployed to a new location, an operator must manually define each detection rule based on the operator's own assessment of the scene, the applicable regulatory requirements, and the threat profile of the facility. This per-site manual configuration is resource intensive, error prone, and creates coverage gaps during the time between deployment and rule completion.

There is therefore a need to provide a system and method that overcomes the drawbacks of conventional security systems by automatically understanding complex scenes through adaptive analytics, generating surveillance rules tailored to the determined context without requiring per-site manual configuration, and continuously refining those rules as the monitored environment changes.

The following presents a simplified summary of the disclosed subject matter in order to provide a basic understanding of some aspects of the disclosed subject matter. This summary is not an exhaustive overview of the disclosed subject matter. It is not intended to identify key or critical elements of the disclosed subject matter or to delineate the scope of the disclosed subject matter. Its sole purpose is to present some concepts of the disclosed subject matter in a simplified form as a prelude to the more detailed description that is presented later. Embodiments according to the invention are disclosed in particular in the appended claims.

In an aspect, the present disclosure provides a system. The system includes a processing circuit. The processing circuit is configured to receive a data stream from a camera. The processing circuit is configured to analyze the data stream by utilizing an AI based Large Vision-Language Model (LVLM) to determine context. The processing circuit is configured to generate one or more surveillance rules based on the context of the data stream. The processing circuit is configured to apply the one or more surveillance rules on the data stream to detect a security event.

In another aspect, the present disclosure provides a method. The method includes receiving, by a processing circuit, a data stream from a camera. The method further includes analyzing, by the processing circuit, the data stream by applying an AI based Large Vision-Language Model (LVLM) to determine context. The method further includes generating, by the processing circuit, one or more surveillance rules based on the context of the data stream. The method further includes applying, by the processing circuit, the one or more surveillance rules on the data stream to detect a security event.

In a further aspect, the present disclosure provides a non-transitory computer-readable medium storing instructions that, when executed by a processing circuit, cause the processing circuit to receive a data stream from a camera. The instructions further cause the processing circuit to analyze the data stream by utilizing an AI based Large Vision-Language Model (LVLM) to determine context. The instructions further cause the processing circuit to generate one or more surveillance rules based on the context of the data stream. The instructions further cause the processing circuit to apply the one or more surveillance rules on the data stream to detect a security event.

In some aspects of the system, the LVLM comprises an image encoder configured to extract visual features from data frames of the data stream, a projection layer configured to align the visual features with text token embeddings into a unified multimodal representation, and a large language model (LLM) backbone configured to process the unified multimodal representation to generate a context output. The projection layer performs a learned linear or nonlinear transformation that maps visual feature vectors from a latent space of the image encoder into a latent space of the LLM backbone.

In some aspects of the system, a change condition causes the processing circuit to update the context, the change condition comprising one or more of detection of the security event, expiration of a periodic re-evaluation interval, introduction of a new data source into the data stream, an update to supplemental context data stored in a database associated with the system, or a determination that the context has changed beyond a threshold, and the updated context triggers the processing circuit to generate one or more additional surveillance rules, such that the system operates as a continuous adaptive loop without requiring manual reconfiguration.

In some aspects, the system provides three complementary pathways for determining context and generating surveillance rules. In a first pathway, the processing circuit derives context directly from the data stream captured by the camera, analyzing visual, audio, textual, and metadata content derived therefrom to automatically infer the environment without external input. In a second pathway, the processing circuit receives supplemental context data comprising one or more of a policy document, a safety regulation, a standardization requirement, a building diagram, a site layout, and a CAD design pertaining to a building space associated with the camera, and generates the one or more surveillance rules further based on the supplemental context data. In a third pathway, the processing circuit initiates a natural language conversation with a user via a user interface to refine the one or more surveillance rules, the natural language conversation comprising one or more exchanges in which the user provides input via one or more of text, speech, and image, and a session manager maintains conversational state across the one or more exchanges such that the one or more surveillance rules are progressively refined without requiring the user to restate previously communicated context.

In some aspects of the method, a change condition causes the processing circuit to reanalyze the data stream to update the context, the change condition comprising one or more of detection of the security event, expiration of a periodic re-evaluation interval, introduction of a new data source into the data stream, an update to supplemental context data stored in a database, or a determination that the context has changed beyond a threshold, and the updated context triggers generation of one or more additional surveillance rules without operator intervention, such that the method iteratively refines surveillance coverage responsive to the change condition.

In yet a further aspect, the present disclosure includes an apparatus having one or more means for performing each above-noted method.

Additional features and advantages of the disclosed subject matter are described in, and will be apparent from, the following Detailed Description and the Figures.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.

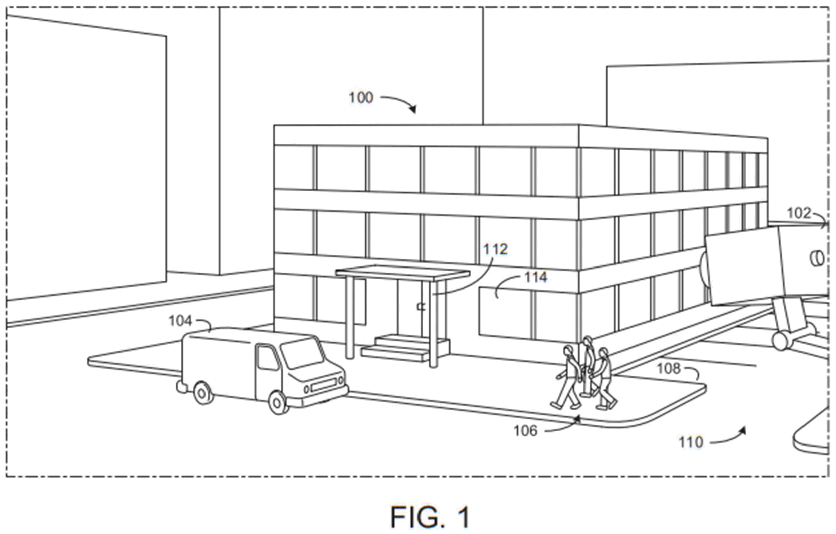

FIG. 1 is a perspective view of a building with a security system including a security camera, a parking lot, vehicles, pedestrians, a sidewalk, a door, and windows, according to some aspects.

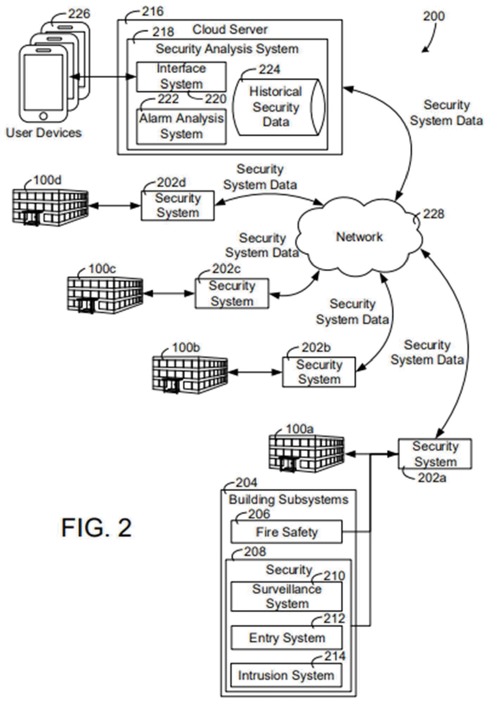

FIG. 2 is a block diagram of building security systems for multiple buildings communicating with a cloud-based security system including a cloud server, a security analysis system, building subsystems, and user devices, according to some aspects.

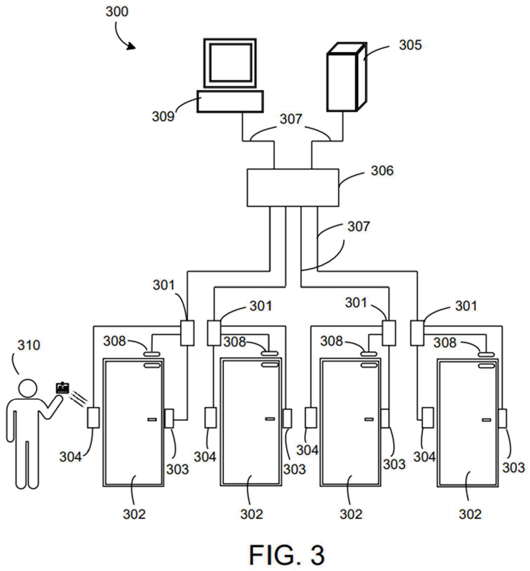

FIG. 3 is a block diagram illustrating several components of an access control system (ACS), including doors, door locks, access reader modules, door sensors, access controllers, a network switch, an ACS server, and an end-user terminal, that can be implemented in the building security systems of FIG. 2, according to some aspects.

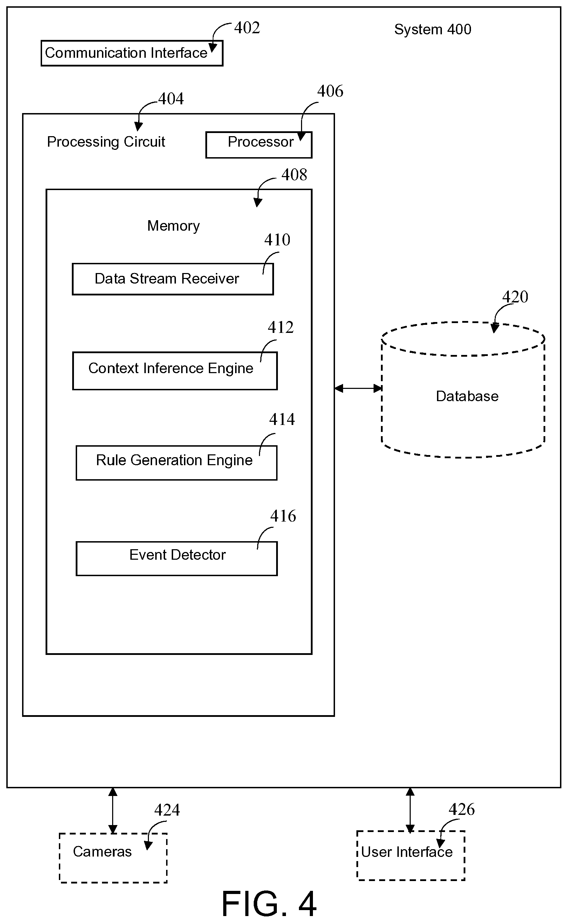

FIG. 4 is a block diagram of a system for generating video surveillance rules, including a communication interface, a processing circuit having a processor and memory, a data stream receiver, a context inference engine, a rule generation engine, an event detector, a database, cameras, and a user interface, according to some aspects of the present disclosure.

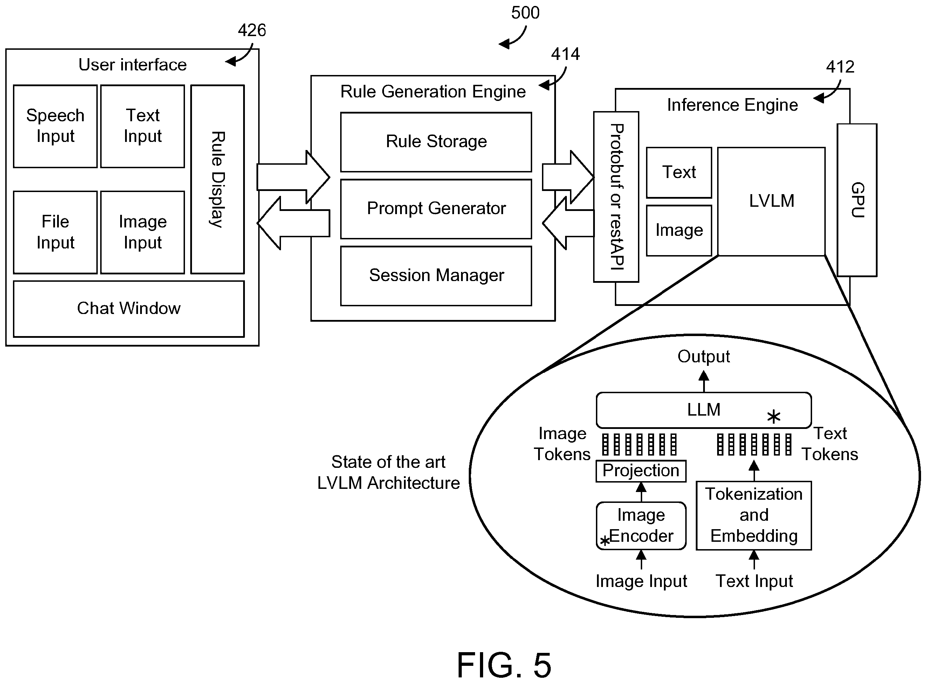

FIG. 5 is an elaborate view of components of the system of FIG. 4, including an inference engine with a GPU and a Large Vision-Language Model (LVLM), a rule generation engine with a prompt generator, rule storage, and session manager, and a user interface with text input, image input, speech input, file input, chat window, and rule display components, according to some aspects of the present disclosure.

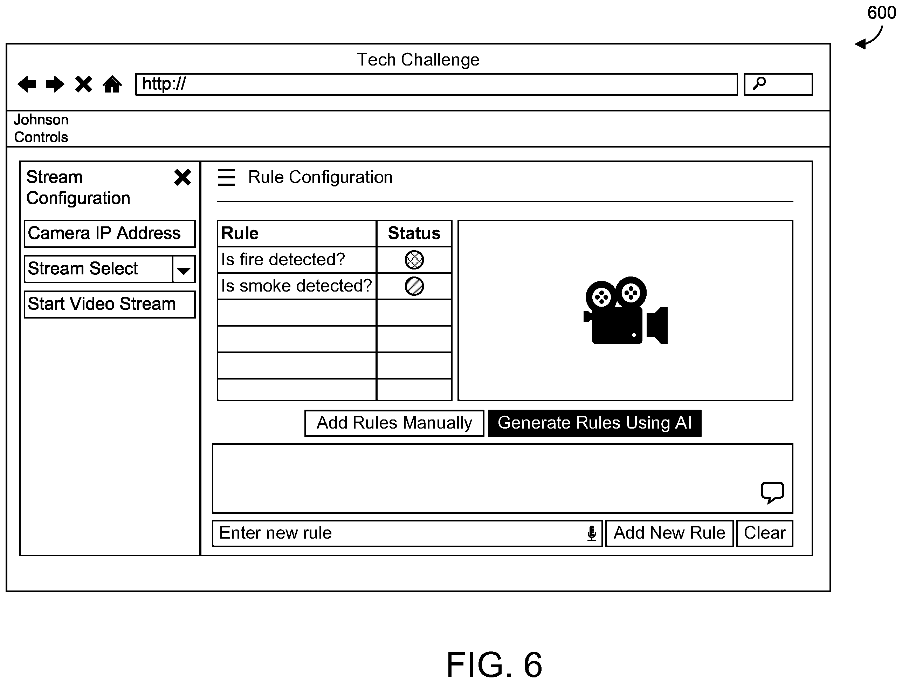

FIG. 6 shows a snapshot of a user interface of the system of FIG. 4, including stream configuration options, a video preview area, rule configuration with rule status indicators, a speech input control, and options for adding rules manually or generating rules using AI, according to some aspects of the present disclosure.

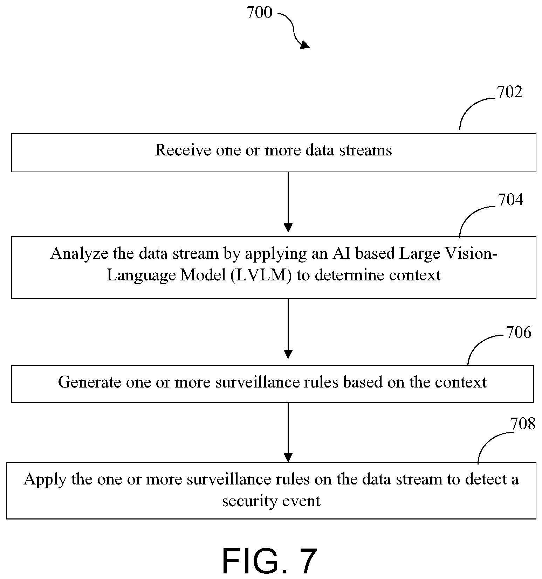

FIG. 7 is a flow chart of a method for generating video surveillance rules, including steps of receiving data streams, analyzing the data stream using an AI based LVLM to determine context, generating surveillance rules based on the context, and applying the surveillance rules to detect a security event, according to some aspects of the present disclosure.

### DETAILED DESCRIPTION

Modern security environments deploy large numbers of cameras across diverse facilities such as airports, hospitals, commercial buildings, parking structures, and industrial sites. Monitoring the data streams from these cameras has traditionally required dedicated human operators who must observe live footage continuously and respond to potential threats in real time. As the number of cameras and coverage areas increases, the demand for trained security personnel scales proportionally, resulting in significant operational cost and human resource burdens. Furthermore, human operators are susceptible to fatigue, distraction, and inconsistent threat assessment, particularly during extended monitoring shifts or when overseeing numerous simultaneous camera feeds.

Some conventional security systems have attempted to reduce the manual monitoring burden by relying on fixed, predefined rulesets or pre-labeled datasets to automate aspects of video analysis. However, such approaches lack the ability to adapt when deployed across diverse and evolving environments. A ruleset configured for one type of facility, such as a retail store, may be entirely unsuitable for a hospital, an airport, or a warehouse, yet reconfiguring these rulesets for each new environment or each change in conditions requires specialized expertise and substantial manual effort. Additionally, pre-labeled datasets used for training conventional analytics are inherently limited to the specific scenarios represented in the training data, leaving these systems unable to recognize novel or unanticipated situations that fall outside the scope of their original configuration.

The present disclosure provides a system and method for automatically generating video surveillance rules by leveraging an AI based Large Vision-Language Model (LVLM) that analyzes data streams from cameras to infer context, thereby eliminating the need for manual rule configuration while enabling adaptive, environment-specific security monitoring. The system includes a processing circuit configured to receive a data stream from one or more cameras, analyze the data stream using the LVLM to determine context such as scene location, scene type, the presence and behavior of objects, and environmental conditions, and then automatically generate one or more surveillance rules that are tailored to the inferred context.

To achieve this, the system includes a context inference engine and a rule generation engine. The context inference engine analyzes visual objects, audio data, textual data, and metadata within the data stream, enabling it to distinguish, for example, an airport terminal from a hospital corridor or a warehouse floor based on cues present in the incoming data. Based on the inferred context, the rule generation engine produces surveillance rules in the form of natural language prompts, logical expressions, or structured queries. Because the rules are expressed in human-readable form, security personnel can readily understand, verify, and refine them without requiring specialized technical knowledge.

The system further includes an event detector that applies the generated surveillance rules to the data stream to detect security events and automatically generate alerts for transmission to appropriate personnel, thereby reducing the reliance on continuous human monitoring and enabling faster response times. Additionally, a user interface allows a user to refine and modify the surveillance rules through natural language conversation, speech input, text input, image input, or file input such as policy documents. Through this interactive refinement, the system can incorporate site-specific compliance requirements, organizational policies, and user preferences, yielding a degree of customization that static, preconfigured rule systems cannot achieve.

While the foregoing description references a Large Vision-Language Model as one aspect, the present disclosure more broadly encompasses any computational model or combination of models capable of processing one or more modalities of input data and producing an output indicative of contextual understanding. Such models include transformer-based architectures, convolutional neural networks, recurrent neural networks, encoder-decoder frameworks, diffusion models, generative adversarial networks, graph neural networks, and any hybrid or ensemble thereof. The model may be a single monolithic model or a pipeline of cooperating specialized models in which one model processes a first modality, a second model processes a second modality, and the respective outputs are fused, concatenated, or otherwise combined. Deployment configurations are equally flexible: the model may be hosted locally on the processing circuit, remotely on one or more cloud servers, at an edge computing device co-located with the camera, or distributed across any combination of local, edge, and cloud resources. Communication between the model and other system components may occur via any suitable protocol, including REST, gRPC, Protocol Buffers, MQTT, WebSocket, or proprietary interfaces.

The data stream analyzed by the system is similarly unconstrained in type, format, and source. As used herein, a data stream includes, but is not limited to, any sequence of data captured or generated by one or more sensing devices over time. Sensing devices encompass visible-light cameras, infrared cameras, thermal imaging cameras, depth-sensing cameras, LiDAR sensors, radar sensors, acoustic sensors, millimeter-wave sensors, and combinations thereof. The data stream may be received in real time as a live stream or retrieved from storage as a recorded stream, and may originate from a single sensing device or from multiple sensing devices having overlapping, adjacent, or non-overlapping fields of view. Data types within the stream may include video at any frame rate or resolution, still image sequences, audio, point cloud data, radar returns, sensor metadata, environmental readings such as temperature or humidity, and access control event data, individually or in any combination.

Correspondingly, the scope of the context that the system may determine extends beyond any particular type of scene, environment, or scenario. Context encompasses any characterization, classification, or description of the circumstances, conditions, or situation depicted or represented in the data stream. By way of non-limiting example, context may relate to a physical environment type, a geographic location, an activity type, a time of day or day of week, an occupancy condition, a weather or lighting condition, a regulatory or compliance regime, a scheduled event, a historical pattern, an operational state of equipment, or any other derivable attribute. Moreover, the system need not infer context solely from the data stream itself; in some aspects, the system may correlate the data stream with external information sources such as schedules, building management system data, access control logs, weather feeds, event calendars, geographic information system data, or previously stored contextual profiles.

The form and structure of the surveillance rules are equally broad. A surveillance rule encompasses any machine-interpretable directive, condition, criterion, or instruction that, when applied to a data stream, enables detection or identification of a security event or condition of interest. Rules may be expressed as natural language prompts, Boolean logic expressions, structured queries, decision trees, classification criteria, threshold comparisons, temporal logic formulas, regular expressions, code-executable scripts, or any other representation interpretable by the processing circuit. A given rule may specify conditions relating to the presence, absence, movement, behavior, state, appearance, count, spatial relationship, or temporal relationship of objects, persons, vehicles, or environmental conditions within the data stream. Rules may also be composite, comprising multiple sub-conditions combined with logical operators, or hierarchical, in which satisfaction of a first rule triggers evaluation of one or more additional rules.

The range of detectable security events is correspondingly expansive. A security event, as used herein, includes, but is not limited to, any occurrence, state, condition, or absence of an expected condition identified by application of one or more surveillance rules to the data stream. Non-limiting examples include unauthorized access or presence, unattended objects, loitering, perimeter breaches, tailgating, crowd formation or dispersal, falls or persons in distress, vehicle violations, fire or smoke, equipment failure, PPE non-compliance, credential violations, abnormal movement patterns, and scheduled procedure violations. A security event may also be defined by the non-occurrence of an expected condition within a specified time window, by a deviation from a learned baseline, or by a combination of individually non-threatening conditions that collectively indicate a higher-level threat when evaluated in aggregate.

From a deployment standpoint, the system architecture is not confined to any particular topology, network configuration, or scale. The processing circuit may reside entirely within a single device, may be distributed across multiple devices within a local network, may reside partially or entirely in one or more cloud computing environments, or may operate as a serverless computing function invoked on demand. The system may serve a single camera, a plurality of cameras at a single site, or cameras distributed across multiple geographically separated sites. Operationally, the system may function autonomously after initial deployment, in a semi-autonomous mode with periodic user confirmation or adjustment, or in a fully interactive mode with continuous user feedback and refinement. User interaction may occur through graphical user interfaces on desktop or mobile devices, voice-controlled interfaces, augmented reality or virtual reality interfaces, chatbot or conversational AI interfaces, API-based programmatic interfaces, or any combination of the foregoing.

Referring to FIG. 1, a building 100 is shown with a security camera 102, a parking lot 110, one or more vehicles 104, one or more pedestrians 106, a sidewalk 108, a door 112, and multiple windows 114, according to aspects of the present disclosure. While FIG. 1 depicts a particular arrangement of these elements for purposes of illustration, the present disclosure is not limited to the specific configuration, environment, or structural elements shown. Before the present disclosure, conventional security systems deployed across monitored environments such as building 100 relied on dedicated human operators to continuously observe camera feeds and manually configure surveillance parameters for each unique deployment site. Such conventional approaches suffered from operator fatigue, inconsistent threat detection, and an inability to adapt monitoring criteria to changing conditions without extensive manual reconfiguration. The present disclosure overcomes these limitations by providing a system that automatically analyzes data streams captured by one or more sensors, such as the security camera 102, infers the context of the monitored environment from the data stream content itself, and generates surveillance rules tailored to that context without requiring per-site manual configuration, thereby reducing operational burden, improving detection consistency, and enabling adaptive security monitoring that scales across heterogeneous environments.

The building 100 represents any physical structure or monitored environment within which or around which the present disclosure operates. While FIG. 1 depicts a multi-story commercial building, the building 100 is not limited to any particular building type, size, construction, or use. In various aspects, the building 100 encompasses a school, a hospital, a retail store, a place of business, a residence, a hotel, an office building, an apartment complex, a warehouse, a transportation terminal, a stadium, a government facility, an outdoor venue, an infrastructure site such as a bridge or tunnel, a construction site, a temporary structure, or any other physical environment where security monitoring is desired. The building 100 need not be a single enclosed structure; in some aspects, the building 100 represents a campus, a complex of interconnected or separate structures, an open-air facility, or a combination of indoor and outdoor areas. The building 100 is associated with the parking lot 110 such that both the building 100 and the parking lot 110 are at least partially within a field of view of the security camera 102. The security camera 102 is positioned to observe a region of interest that includes one or more of the building 100 and the parking lot 110, capturing a data stream of the monitored environment. In some aspects, multiple security cameras 102 are deployed to capture the building 100 and the parking lot 110 from multiple angles, including overlapping fields of view. The data stream captured by the security camera 102 is provided to a processing circuit of the present disclosure for analysis, enabling the system to infer context and generate surveillance rules automatically based on the observed environment rather than requiring predefined configuration for each camera placement.

The parking lot 110 represents any area adjacent to, surrounding, or associated with the building 100 in which mobile objects or persons are present. The parking lot 110 is not limited to a paved automotive parking area; in various aspects, the parking lot 110 encompasses a roadway, a loading dock, a driveway, a drop-off zone, an access road, a perimeter area, a courtyard, a plaza, a field, or any other region that is at least partially within the field of view of the security camera 102. The vehicles 104 include any mobile conveyance, whether motorized or non-motorized, including cars, trucks, buses, delivery vehicles, emergency vehicles, bicycles, scooters, drones, forklifts, carts, watercraft, or autonomous mobile platforms. The pedestrians 106 include any person, group of persons, or human-controlled entity that traverses, occupies, enters, or exits any portion of the monitored environment. The building 100 is further surrounded, or partially surrounded, by the sidewalk 108, which represents any pathway, walkway, corridor, ramp, or transitional area that facilitates movement of the pedestrians 106, deliveries, or other activities adjacent to the building 100. The security camera 102 captures interactions among the vehicles 104, the pedestrians 106, the sidewalk 108, and the building 100 as part of the data stream. The context inference engine of the present disclosure analyzes this data stream to determine context, including presence, identity, classification, behavior, trajectory, spatial relationship, and temporal pattern of the vehicles 104 and the pedestrians 106, their interactions with the building 100 and the parking lot 110, and environmental conditions observable within the field of view, enabling the system to generate surveillance rules that are specifically relevant to the observed activity without requiring an operator to predefine detection criteria.

The building 100 includes the door 112 and the multiple windows 114, which represent access points and openings of any type within the monitored environment. The door 112 is not limited to a hinged entry door; in various aspects, the door 112 encompasses a sliding door, a revolving door, a gate, a turnstile, a garage door, a roll-up door, a barrier arm, an elevator door, or any other physical or logical access point through which entry or exit occurs. Similarly, the windows 114 are not limited to glass window panes; the windows 114 encompass any opening, vent, skylight, hatch, panel, or barrier that separates an interior space from an exterior space or from another interior space. An access control system is implemented within or in association with the building 100 to secure these access points. The access control system includes one or more credential readers positioned at or near the door 112 to restrict access. Credential readers encompass badge readers, card readers, key fob readers, mobile device readers using near-field communication (NFC) or Bluetooth, QR code scanners, PIN entry keypads, biometric scanners including facial recognition systems, fingerprint scanners, iris scanners, palm vein readers, voice recognition systems, and any other mechanism for authenticating an identity of a person seeking access. The pedestrians 106 are each associated with one or more credentials that they utilize with the access control system to gain access through the door 112. Furthermore, additional doors within the building 100 include credential readers, and different zones within the building 100 have different access levels. The access control system generates events responsive to interactions with the access points, including an indication that a particular person or credential has interacted with the door 112, a door forced open (DFO) event detected by a door sensor when the door 112 is opened without proper credential presentation, a door held open event when the door 112 remains open beyond a configured duration, and a tailgating event when multiple persons traverse the door 112 on a single credential presentation. The windows 114 are secured by the access control system via one or more environmental sensors configured to detect physical disturbance. The environmental sensors encompass vibration sensors, glass break detectors, contact sensors, motion sensors, acoustic sensors, and any other sensor capable of detecting a change in state of the windows 114. If disturbance patterns or levels exceeding a threshold are detected, the access control system generates an alarm event for the windows 114.

In other aspects, the building 100 is one of many buildings belonging to a single industrial park, shopping mall, commercial park, campus, or mixed-use development having a common parking lot 110 and one or more shared security cameras 102. In another aspect, the building 100 is a residential building or multiple residential buildings that share a common roadway, parking area, or open space. The present disclosure is not limited to any particular ownership, tenancy, or operational model; the system operates equally whether the monitored environment is owned by a single entity, shared among multiple tenants, operated by a third-party security provider, or governed by a public authority. Regardless of the specific deployment environment, the security camera 102 captures the data stream encompassing the building 100, the parking lot 110, and the activities of the vehicles 104 and the pedestrians 106 therein. The present disclosure includes a processing circuit that receives this data stream and applies an AI based Large Vision-Language Model (LVLM) to analyze the content of the data stream, determine the context of the environment depicted therein, and generate one or more surveillance rules based on that context. The generated surveillance rules are then applied to the data stream to detect a security event, such as unauthorized access through the door 112, forced entry, unattended objects in the parking lot 110, suspicious behavior of the pedestrians 106, vehicle-related anomalies involving the vehicles 104, environmental hazards, or any other condition identified as relevant to the inferred context. By automatically generating context-specific surveillance rules from the observed data stream, the present disclosure eliminates the need for operators to manually define separate rule sets for each building type, camera location, environmental scenario, or organizational boundary, thereby enabling scalable, adaptive security monitoring across diverse facility types, ownership structures, and geographic configurations.

Although FIG. 1 depicts the security camera 102 as the data-capturing device, the present disclosure is not limited to any single sensor modality or sensor count. The security camera 102 represents any device or combination of devices that produces a data stream suitable for analysis by the processing circuit, including visible-light cameras, infrared cameras, thermal imaging cameras, depth-sensing cameras, pan-tilt-zoom cameras, fisheye cameras, body-worn cameras, dashboard cameras, drone-mounted cameras, LiDAR sensors, radar sensors, acoustic sensors, and environmental sensors. The system operates with a single sensor or with a plurality of sensors that provide complementary, overlapping, or non-overlapping coverage. Data streams from multiple sensors are processed individually, collectively, or as a fused composite stream. The positioning of the security camera 102 relative to the building 100 and the parking lot 110 shown in FIG. 1 is illustrative; the sensor is mounted on the building 100, on a pole, on a vehicle, on a drone, on infrastructure such as a streetlight or traffic signal, or at any other vantage point. Regardless of sensor type, count, or placement, the processing circuit of the present disclosure receives the resulting data stream and applies the AI based LVLM to determine context and generate surveillance rules in the manner described herein.

Similarly, the subjects of surveillance depicted in FIG. 1 - the vehicles 104 and the pedestrians 106 - are representative and not exhaustive. The present disclosure operates to detect, classify, track, and monitor any object, person, animal, vehicle, equipment, material, substance, or environmental condition that appears within the data stream. Subjects of surveillance further encompass packages, containers, luggage, equipment, signage, barriers, structural features, vegetation, weather phenomena, lighting conditions, and any other entity or condition observable by the sensor. The surveillance rules generated by the system address interactions among any combination of these subjects, including spatial proximity, temporal cooccurrence, trajectory intersection, behavioral anomaly, state change, and absence of an expected subject. By not constraining the types of subjects that the system monitors, the present disclosure provides flexibility to address security, safety, compliance, and operational use cases across virtually any monitored environment without requiring modification to the underlying system architecture.

As used in connection with FIG. 1 and throughout the present disclosure, the building 100 includes, but is not limited to, any physical structure, facility, premises, or environment in which or around which monitoring is performed. The building 100 is not limited to a traditional walled enclosure; it encompasses any defined area of interest including, by way of non-limiting example, a commercial office building, a hospital, a school, a university campus, a retail store, a warehouse, a manufacturing plant, a data center, a transportation terminal such as an airport or a train station, a stadium, a government facility, a military installation, a correctional facility, a hotel, an apartment complex, a single-family residence, a construction site, a temporary event venue, a bridge, a tunnel, a power plant, a water treatment facility, a port, a shipping yard, and an open-air park or recreational area. The building 100 further encompasses combinations of such environments, including a campus comprising multiple discrete structures connected by outdoor pathways, a mixed-use development combining residential, retail, and office space, or a sprawling industrial park with numerous independent buildings sharing common infrastructure. In each case, the building 100 constitutes the environment or facility that the security camera 102 monitors and for which the present disclosure generates surveillance rules.

The security camera 102, as depicted in FIG. 1, includes, but is not limited to, any sensor, imaging device, or data-acquisition apparatus capable of producing a data stream of a monitored environment. The security camera 102 encompasses visible-light video cameras, infrared cameras, thermal imaging cameras, multispectral cameras, hyperspectral cameras, depth-sensing cameras such as time-of-flight or structured-light sensors, pan-tilt-zoom (PTZ) cameras, fisheye cameras, 360-degree panoramic cameras, body-worn cameras, vehicle-mounted cameras, drone-mounted cameras, LiDAR sensors, radar sensors, acoustic sensors, ultrasonic sensors, millimeter-wave sensors, and any combination thereof. The security camera 102 further encompasses smart cameras having onboard processing capability, edge cameras that perform local inference before transmitting data, and traditional cameras that transmit raw or compressed video to a remote processing circuit. In each instance, the security camera 102 produces the data stream that the processing circuit of the present disclosure receives, analyzes, and applies surveillance rules to.

The data stream, as referenced in FIG. 1 and in the claims, includes, but is not limited to, any continuous, periodic, or discrete flow of data produced by the security camera 102 or other sensing device and provided to the processing circuit for analysis. The data stream encompasses live video comprising a succession of image frames at any frame rate or resolution, pre-recorded video retrieved from local or remote storage, sequences of still images captured at regular or irregular intervals, audio data captured by microphones integrated with or separate from the security camera 102, and metadata generated by the sensing device or by intermediate processing stages. Metadata encompasses timestamps, geolocation coordinates, camera identifiers, lens parameters, exposure settings, motion vectors, object detection annotations produced by onboard processing, environmental sensor readings such as temperature, humidity, or ambient light level, and access control event logs. The data stream is received by the processing circuit in any suitable format including, by way of non-limiting example, H.264, H.265, MJPEG, raw pixel arrays, PCM audio, AAC audio, JSON-formatted metadata packets, and Protocol Buffer serialized messages. The data stream is transmitted to the processing circuit over any communication medium, including wired Ethernet, coaxial cable, fiber optic cable, Wi-Fi, cellular networks, Bluetooth, Zigbee, LoRa, satellite links, and any combination thereof.

The parking lot 110 includes, but is not limited to, any open or enclosed area associated with or adjacent to the building 100 in which objects, vehicles, or persons are present and observable by the security camera 102. The parking lot 110 is not limited to a paved surface designated for vehicle storage; it encompasses any exterior or interior area including a surface parking lot, a multi-level parking garage, a roadway, a driveway, an access road, a loading dock, a shipping and receiving area, a drop-off zone, a taxi queue, a bus stop, a train platform, a courtyard, a plaza, a sports field, an agricultural field, a construction staging area, a perimeter buffer zone, a fenced compound, a rooftop, and a body of water such as a marina or harbor within the sensor's field of view. In each instance, the parking lot 110 represents a region captured within the data stream that the present disclosure analyzes in conjunction with the building 100 to infer context and generate appropriate surveillance rules.

The vehicles 104 include, but are not limited to, any mobile object, conveyance, or platform, whether motorized or non-motorized, autonomous or human-operated, that appears within the data stream. The vehicles 104 encompass passenger automobiles, trucks, vans, buses, motorcycles, bicycles, scooters, electric personal mobility devices, forklifts, pallet jacks, golf carts, utility vehicles, emergency vehicles, construction equipment, agricultural equipment, watercraft, aircraft, unmanned aerial vehicles (drones), autonomous ground vehicles, robotic delivery platforms, railcars, trolleys, and any wheeled, tracked, or airborne conveyance. The present disclosure analyzes the presence, movement, speed, trajectory, parking behavior, loading or unloading activity, and interactions of the vehicles 104 with other elements such as the pedestrians 106, the building 100, and the parking lot 110 when determining context and generating surveillance rules.

The pedestrians 106 include, but are not limited to, any person, group of persons, or human-associated entity that is present within the data stream. The pedestrians 106 are not limited to persons walking on foot; the term encompasses persons standing, sitting, running, cycling, using a wheelchair or mobility device, carrying objects, pushing carts, operating handheld devices, wearing uniforms or personal protective equipment, accompanied by animals, and engaged in any other activity observable within the field of view of the security camera 102. The present disclosure tracks and analyzes the pedestrians 106 with respect to their identity, classification (e.g., employee, visitor, contractor, delivery person, unknown), behavior, gait, posture, trajectory, dwell time, group formation, interaction with other pedestrians 106 or with the vehicles 104, and proximity to access points such as the door 112, enabling the system to generate surveillance rules relevant to the observed patterns of human activity.

The sidewalk 108 includes, but is not limited to, any pathway, passageway, corridor, ramp, stairway, escalator, moving walkway, bridge, overpass, underpass, tunnel, or transitional zone that facilitates movement of the pedestrians 106 in, around, or between portions of the monitored environment. The sidewalk 108 is not limited to a concrete pedestrian path; it encompasses hallways within the building 100, outdoor walkways, covered breezeways, wheelchair ramps, emergency exit routes, fire escapes, alleys, and any other defined or implied route along which the pedestrians 106 travel. The present disclosure monitors the sidewalk 108 as a region of the data stream in which pedestrian traffic patterns, congestion, loitering, falls, obstructions, and directional flow are analyzed by the context inference engine to generate contextually appropriate surveillance rules.

The door 112 includes, but is not limited to, any physical or logical access point that permits or restricts entry to, exit from, or passage between areas within the monitored environment. The door 112 encompasses a hinged door, a sliding door, a revolving door, a roll-up door, a garage door, a gate, a turnstile, a barrier arm, a bollard, a security checkpoint, an elevator door, a manhole cover, a hatch, an emergency exit, an airlock, and any other mechanism through which controlled or uncontrolled passage occurs. The windows 114 include, but are not limited to, any opening, panel, barrier, or boundary element that separates one area from another and through which unauthorized ingress is possible. The windows 114 encompass glass window panes of any size or configuration, skylights, clerestory windows, glass curtain walls, ventilation openings, louvers, roof hatches, access panels, and translucent or opaque barriers that are secured by an alarm system or sensor. In each case, the door 112 and the windows 114 are monitored by the access control system and observed within the data stream to detect events including unauthorized access, forced entry, propped-open conditions, and perimeter breaches.

The field of view, as referenced in connection with FIG. 1, includes, but is not limited to, the spatial extent of the environment that the security camera 102 captures at any given time. The field of view encompasses a fixed angular range defined by the camera lens, a dynamically adjustable range when PTZ capabilities are employed, a composite range formed by stitching or fusing feeds from multiple cameras, and a virtual range defined in software by cropping or digitally zooming into a sub-region of the captured image. The field of view is characterized by horizontal angle, vertical angle, depth of field, focal length, and effective resolution at distance. In various aspects, the system adjusts or selects the field of view based on context-driven surveillance rules - for example, automatically directing a PTZ camera to track a detected subject - thereby enabling adaptive spatial coverage without manual operator intervention.

The access control system, as referenced in connection with FIG. 1, includes, but is not limited to, any combination of hardware, software, and communication infrastructure that governs, monitors, logs, and enforces access to one or more areas within or around the building 100. The access control system encompasses electronic badge readers, smart card readers, key fob readers, mobile credential readers using near-field communication (NFC), Bluetooth Low Energy (BLE), or ultra-wideband (UWB), QR code or barcode scanners, PIN or password keypads, biometric scanners including fingerprint, iris, retina, palm vein, facial recognition, and voice recognition devices, and any combination thereof. The access control system generates events that the present disclosure incorporates into the data stream or correlates with the data stream for context inference purposes. Such events include, by way of non-limiting example, a valid credential presentation, an invalid or expired credential attempt, a door forced open (DFO) event, a door held open (DHO) event, a tailgating event in which multiple persons pass through on a single credential, an anti-passback violation, and a request-to-exit (REX) signal. The present disclosure analyzes these access control events in conjunction with the visual, audio, and metadata components of the data stream captured by the security camera 102, enabling the system to generate surveillance rules that incorporate both physical and logical access indicators.

The processing circuit, as referenced in the claims and in connection with FIG. 1, includes, but is not limited to, any computational hardware, firmware, or combination thereof that performs the operations of receiving the data stream, analyzing the data stream, determining context, generating surveillance rules, and applying the surveillance rules to detect security events. The processing circuit encompasses a general-purpose processor, a multi-core processor, a graphics processing unit (GPU), a tensor processing unit (TPU), a neural processing unit (NPU), a digital signal processor (DSP), an application-specific integrated circuit (ASIC), a field-programmable gate array (FPGA), a system-on-chip (SoC), a microcontroller, and any combination or cluster thereof. The processing circuit includes one or more memory devices such as random access memory (RAM), read-only memory (ROM), flash memory, solid-state drives, hard disk drives, and any other volatile or non-volatile storage medium storing instructions executable by the processor. The processing circuit resides within a single physical device, is distributed across multiple devices in a local area network, is hosted partially or entirely in cloud computing infrastructure, or operates as a combination of local, edge, and cloud resources. In each case, the processing circuit performs the functions recited in the claims regardless of its specific hardware implementation, geographic location, or interconnection topology.

The context, as referenced in the claims, includes, but is not limited to, any characterization, classification, determination, or understanding of the circumstances, environment, scene, activity, or conditions represented in or derivable from the data stream. The context encompasses a physical environment type (e.g., airport terminal, hospital ward, warehouse aisle, school hallway, parking garage), a geographic location, an activity category (e.g., foot traffic, vehicular movement, loading operations, emergency response), a temporal condition (e.g., time of day, day of week, season, holiday period), an occupancy level, a weather or lighting condition, a regulatory or compliance regime applicable to the location, a scheduled event or activity, a historical behavioral baseline, and an operational state of equipment or infrastructure within the monitored environment. The context is determined by the AI based LVLM analyzing visual, textual, audio, and metadata components of the data stream individually or in combination, and in some aspects is further informed by external data sources including building management system outputs, access control event logs, weather feeds, geographic information systems, event calendars, policy documents, and previously stored contextual profiles.

The surveillance rules, as referenced in the claims, include, but are not limited to, any machine-interpretable directive, condition, criterion, threshold, instruction, query, or logic that, when applied to the data stream by the processing circuit, enables detection or identification of a security event or condition of interest. The surveillance rules encompass natural language prompts provided to the LVLM, Boolean logic expressions, structured queries, decision trees, classification criteria, threshold comparisons, temporal logic formulas, regular expressions, scoring functions, weighting algorithms, executable scripts, and any other representation that the processing circuit interprets and applies. For example, a surveillance rule expressed as a natural language prompt is "is there any unattended bag or package in the area." Another example is a Boolean rule that evaluates whether a person is present in a restricted zone after business hours and no valid credential event has been logged within a preceding time window. The surveillance rules are generated automatically by the rule generation engine based on the inferred context, and in some aspects are further refined through user interaction via the user interface. A single surveillance rule addresses a single condition, or multiple conditions combined with logical operators to form composite rules, or hierarchical chains in which satisfaction of a first rule triggers evaluation of additional rules.

The security event, as referenced in the claims, includes, but is not limited to, any occurrence, condition, state, absence of a state, or combination of conditions identified by the processing circuit through application of one or more surveillance rules to the data stream. The security event encompasses unauthorized access or attempted access to a restricted area, detection of an unattended object such as a bag, package, or container, loitering by a person beyond a threshold duration, perimeter breach, tailgating through a controlled access point, crowd formation or unexpected dispersal, a person who has fallen or appears to be in distress, vehicular violations such as unauthorized parking, speeding, or wrong-way travel, fire or smoke detection, equipment malfunction or failure, absence of required personal protective equipment, credential violations, suspicious behavioral patterns including unusual trajectories, repeated reconnaissance of a location, or attempted concealment. A security event is further defined by the non-occurrence of an expected condition within a specified time window, by a deviation from a learned or configured behavioral baseline, or by an aggregate of individually unremarkable observations that collectively satisfy a composite surveillance rule indicating a higher-level concern. Upon detection of a security event, the processing circuit generates one or more alerts for transmission to an electronic device associated with security personnel, building administrators, or other designated recipients.

Referring to FIG. 2, a security system 200 extends the single-building environment of FIG. 1 to a multi-building architecture in which a plurality of buildings 100a-100d communicate with a cloud server 216 through a network 228. Before the present disclosure, security operators managing multiple geographically distributed buildings faced the challenge of separately configuring, maintaining, and monitoring independent security installations at each location, with no unified mechanism for aggregating security data, correlating events across sites, or applying consistent analytical intelligence to data streams originating from different environments. The present disclosure addresses these challenges by providing the security system 200 in which the cloud server 216 hosts a security analysis system 218 that receives and aggregates security system data from each of the buildings 100a-100d, enabling centralized analysis, cross-site event correlation, and consistent application of AI-driven surveillance rule generation across the entire portfolio of monitored facilities. By centralizing the analytical capability within the cloud server 216, the present disclosure allows security personnel to monitor all buildings 100a-100d from a single set of user devices 226 and receive alerts generated from any building without needing to access each building's local security system individually.

In an example implementation, the security system 200 includes buildings 100a-100d, each associated with a respective security system 202a-202d. The buildings 100a-100d are the same as or similar to the building 100 described with reference to FIG. 1, and each building 100a-100d represents any physical structure, facility, or monitored environment as broadly described herein. The security systems 202a-202d each include one or more controllers, servers, and computers located in a security panel or forming part of a central computing system for the respective building. The security systems 202a-202d serve as local collection and coordination points for security data generated within each building, and communicate this data to the cloud server 216 via the network 228 for centralized processing by the security analysis system 218.

Each security system 202a-202d communicates with, or includes, various security sensors and actuators organized as building subsystems 204. The building subsystems 204 include fire safety subsystems 206 and security subsystems 208. The fire safety subsystems 206 include smoke sensors, heat detectors, carbon monoxide sensors, alarm notification devices, and suppression activation components. The security subsystems 208 include a surveillance system 210, an entry system 212, and an intrusion system 214. The surveillance system 210 includes one or more cameras, such as the security camera 102 described with reference to FIG. 1, along with associated image and video processing systems for monitoring rooms, hallways, parking lots, building exteriors, rooftops, and other areas within or surrounding the building. Each camera of the surveillance system 210 captures a data stream that the processing circuit of the present disclosure receives and analyzes using the AI based LVLM to determine context and generate surveillance rules, as described herein. The entry system 212 includes one or more systems configured to control ingress and egress, such as door sensors, turnstiles, gated entries, barrier arms, badge readers, and biometric authentication devices. The intrusion system 214 includes one or more sensors configured to detect whether a window, door, or other access point has been forced open, and further includes keypad modules for arming and disarming the security system and motion sensors (e.g., infrared, passive infrared, microwave, dual-technology) configured to detect motion in various zones of the building.

The buildings 100a-100d are located in various cities, states, and countries, and the security system 200 is not limited to any particular number of buildings. An entity such as a retail chain, a hospital network, an educational institution, a property management company, or any other organization owns and operates any number of buildings 100a-100d, and the security system 200 aggregates and analyzes security data from all such buildings regardless of their geographic distribution. The security systems 202a-202d record data from the building subsystems 204, including data streams from the surveillance system 210, event data from the entry system 212 and the intrusion system 214, and alarm data from the fire safety subsystems 206, and communicate the collected security system data to the cloud server 216 via the network 228.

The network 228 communicatively couples the devices, systems, and servers of the security system 200. The network 228 includes one or more of, or a combination of, a Wi-Fi network, a wired Ethernet network, a ZigBee network, a Bluetooth network, a cellular network, a LoRa network, a satellite link, and any other wired or wireless network. The network 228 operates as a local area network, a wide area network (e.g., the Internet, a building WAN), or a combination thereof, and uses a variety of communications protocols including, without limitation, BACnet, IP, LON, MQTT, AMQP, CoAP, and HTTP/HTTPS. The network 228 includes routers, modems, network switches, gateways, firewalls, and load balancers as appropriate for the deployment. By supporting heterogeneous networking technologies, the security system 200 enables integration of buildings 100a-100d that use different local communication infrastructures without requiring uniform networking hardware across all sites.

The cloud server 216 includes the security analysis system 218 that receives the security system data from the security systems 202a-202d of the buildings 100a-100d. The cloud server 216 includes one or more processing circuits having processors, memory devices, and databases configured to perform the functionalities described herein. A processing circuit of the cloud server 216 includes one or more processors and one or more memory devices. The processor is a general-purpose processor, a special-purpose processor, an application-specific integrated circuit (ASIC), one or more field-programmable gate arrays (FPGAs), a graphics processing unit (GPU), a tensor processing unit (TPU), a neural processing unit (NPU), a digital signal processor (DSP), a system-on-chip (SoC), a group of processing components, or any other suitable processing component or combination thereof. The processor executes computer code and instructions stored in the memory or received from other computer-readable media (e.g., optical disc storage, network storage, a remote server, a container registry). In some aspects, the cloud server 216 is a private server, a public cloud instance, a hybrid cloud deployment, or a multi-tenant platform, and the processing circuit is distributed across multiple physical or virtual machines to provide scalability and redundancy.

The memory includes one or more devices (e.g., memory units, memory devices, storage devices) for storing data and computer code for completing and facilitating the various processes described in the present disclosure. The memory includes random access memory (RAM), read-only memory (ROM), hard drive storage, solid-state storage, temporary storage, non-volatile memory, flash memory, optical memory, or any other suitable memory for storing software objects and computer instructions. The memory includes database components, object code components, script components, model weight files, configuration files, or any other type of information structure for supporting the activities and information structures described in the present disclosure. The memory is communicably connected to the processor via the processing circuit and includes computer code for executing, by the processor, one or more processes described herein.

In some aspects, the cloud server 216 is located on premises within one of the buildings 100a-100d. For example, a user may require that security, fire, or building management data remain within the organization's physical control to satisfy data sovereignty requirements, reduce latency, or minimize the risk of data compromise. In such an aspect, the cloud server 216 is located on-premises instead of within an off-premises cloud platform, while retaining the same functional capabilities including hosting the security analysis system 218 and performing AI-driven surveillance rule generation. In other aspects, a hybrid deployment is used in which certain processing, such as initial data stream analysis and context inference, occurs locally at the security systems 202a-202d or at an edge server within the building, while aggregated analysis, historical correlation, and cross-site event detection occur at a remote cloud server 216.

The security analysis system 218 implements an interface system 220, an alarm analysis system 222, and a database storing historical security data 224 collected from the security systems 202a-202d. The interface system 220 provides various interfaces to user devices 226 for monitoring and controlling the security systems 202a-202d of the buildings 100a-100d. The user devices 226 include, without limitation, smartphones, tablets, laptop computers, desktop computers, wearable devices, and dedicated security monitoring terminals. The interfaces provided by the interface system 220 include maps showing building layouts and camera locations, alarm dashboards presenting real-time and historical alarm information, maintenance ordering systems, reporting tools, and administrative controls for configuring the security systems 202a-202d remotely. The historical security data 224 includes aggregated security alarm and event data collected via the network 228 from all of the buildings 100a-100d over time, providing a longitudinal dataset that the security analysis system 218 uses for trend analysis, anomaly detection, and cross-site correlation. The alarm analysis system 222 is configured to analyze the aggregated data to identify insights, detect alarms, reduce false alarms through correlation of events across multiple buildings and time periods, and prioritize alerts based on severity, recurrence, and contextual relevance. The analysis results of the alarm analysis system 222 are provided to a user via the interface system 220 on the user devices 226, and in some aspects, the results are provided as control actions transmitted to the security systems 202a-202d via the network 228 to adjust local security configurations, update surveillance rules, or activate building subsystem responses automatically.

The security system 200 is not limited to the specific multi-building configuration depicted in FIG. 2. The buildings 100a-100d represent any collection of two or more monitored environments, and the present disclosure encompasses configurations ranging from two buildings under common ownership to thousands of geographically distributed sites operated by different entities under a shared security service. The buildings 100a-100d are not limited to permanent structures and encompass temporary installations such as construction sites, event venues, and mobile command posts. In some aspects, one or more of the buildings 100a-100d is a vehicle fleet, a maritime vessel, an aircraft, a rail network, a pipeline corridor, or any other distributed asset that generates security-relevant data streams. The security system 200 operates regardless of whether the buildings 100a-100d share common ownership, common geography, common building management infrastructure, or any other common attribute - the only requirement is that the security systems 202a-202d at each location communicate security system data to the cloud server 216 via the network 228.

The security systems 202a-202d are not limited to dedicated security panels or centralized building controllers. Each security system 202a-202d encompasses any local computing resource, embedded device, edge gateway, or distributed collection of processing nodes that aggregates, preprocesses, or relays data from one or more building subsystems 204 to the cloud server 216. In some aspects, the security system 202a-202d is a single integrated appliance; in other aspects, it is a software service running on general-purpose building automation hardware, a containerized application executing on an edge server, a firmware module embedded in a network-attached camera, or a collection of microservices distributed across multiple devices within the building. The security systems 202a-202d perform local preprocessing such as compression, encryption, filtering, buffering, transcoding, feature extraction, and preliminary event detection before transmitting data to the cloud server 216, or alternatively transmit raw unprocessed data streams directly.

The building subsystems 204 are not limited to fire safety subsystems 206 and security subsystems 208. The building subsystems 204 encompass any collection of sensors, actuators, controllers, or data-producing systems deployed within or associated with a building 100a-100d that generates data relevant to security, safety, or operational awareness. Additional building subsystems 204 include, without limitation, HVAC systems providing occupancy and environmental data, lighting control systems providing zone-activity indicators, elevator and escalator systems providing traffic flow data, intercom and public address systems, parking management systems, visitor management systems, point-of-sale systems providing transaction anomaly data, and any combination thereof. Each building subsystem 204 contributes a respective data stream or event feed to the security system 202a-202d, which aggregates and forwards the data to the cloud server 216 for analysis by the security analysis system 218.

The network 228 is not limited to any particular topology, protocol, medium, or architecture. The network 228 encompasses any communication path or combination of communication paths through which data travels between the security systems 202a-202d and the cloud server 216. The network 228 operates as a dedicated private network, a shared public network, a virtual private network overlaid on public infrastructure, a mesh network, a star network, a ring network, or any hybrid topology. The network 228 supports synchronous and asynchronous communication, streaming and batch transfer, unicast and multicast delivery, and encrypted and unencrypted channels. In some aspects, different buildings 100a-100d connect to the cloud server 216 via different network types - for example, a first building uses a fiber-optic wide area network while a second building uses a cellular connection - and the security system 200 operates without requiring uniform networking across all sites.

The cloud server 216 is not limited to a single physical server, a particular deployment model, or a specific geographic location. The cloud server 216 encompasses any one or more computing resources - physical, virtual, or serverless - that host the security analysis system 218 and perform the centralized analytical functions described herein. The cloud server 216 operates as a single on-premises server, a cluster of on-premises servers, one or more virtual machines in a public cloud, a containerized microservice architecture, a serverless function-as-a-service deployment, or any combination thereof. The cloud server 216 is geographically co-located with one or more of the buildings 100a-100d, geographically remote from all buildings, or distributed across multiple geographic regions for redundancy and latency optimization. In each case, the cloud server 216 performs the same function of receiving security system data from the security systems 202a-202d and applying the security analysis system 218 regardless of its physical or virtual implementation.

The security analysis system 218 is not limited to the specific combination of the interface system 220, the alarm analysis system 222, and the historical security data 224 as depicted. The security analysis system 218 encompasses any software, firmware, or hardware module or collection of modules that receives security system data from a plurality of buildings and performs one or more of aggregation, correlation, pattern recognition, anomaly detection, rule generation, event classification, alert prioritization, false alarm suppression, and automated response coordination. In some aspects, the security analysis system 218 includes the AI based LVLM described herein, which receives data streams from the surveillance systems 210 of multiple buildings 100a-100d and generates context-specific surveillance rules for each building based on the LVLM's analysis of the respective data stream. In other aspects, the security analysis system 218 further includes predictive analytics modules, natural language report generators, compliance verification engines, or machine learning model training pipelines that use the historical security data 224 to continuously improve detection accuracy across all monitored buildings.

The user devices 226 are not limited to any particular form factor, operating system, or interaction modality. The user devices 226 encompass any computing endpoint through which a human operator, administrator, or automated system receives information from, or provides input to, the security analysis system 218. The user devices 226 include smartphones, tablets, laptop computers, desktop workstations, dedicated monitoring terminals, wall-mounted displays, smart watches, augmented reality headsets, virtual reality headsets, voice-activated assistants, and application programming interfaces (APIs) through which third-party systems receive alerts and transmit commands programmatically. The interface system 220 delivers information to the user devices 226 via web applications, native mobile applications, desktop applications, push notifications, email, SMS, voice calls, webhooks, message queue publications, or any other delivery mechanism. In some aspects, different user devices 226 receive different views or subsets of information based on user role, geographic responsibility, or clearance level, and the interface system 220 adapts the presentation format to the capabilities of each user device 226.

Referring to FIG. 3, an access control system (ACS) 300 is a block diagram representing the physical access control infrastructure that can be implemented within any of the buildings 100a-100d described with reference to FIG. 2. The ACS 300 operates in conjunction with the security system 200 to provide granular control over physical entry points, generating access events that serve as data inputs to the security analysis system 218 and, by extension, to the AI based Large Vision-Language Model (LVLM) of the present disclosure. By structuring access control as a hierarchical system with access controllers 301, a network switch 306, and a centralized ACS server 305, the present disclosure enables correlation of physical access event data with the video data stream captured by the surveillance system 210, thereby providing the context inference engine with richer contextual information than video alone would provide. This multi-source data fusion enables the generation of surveillance rules that account for both visual observations and credential-based interactions occurring at the same access points, reducing false alarms and enabling detection of complex security events such as tailgating, credential sharing, and unauthorized access attempts that coincide with visual anomalies.

In an example implementation, the ACS 300 includes a plurality of doors 302, each representing a controlled access point within the building. Each door 302 is associated with a door lock 303, an access reader module 304, and one or more door sensors 308. The door lock 303 is an electronically actuated locking mechanism that transitions between a locked state and an unlocked state in response to a command from an access controller 301. The access reader module 304 is a credential-sensing device positioned at or near the door 302 that captures identification information from a person 310 seeking access. The door sensors 308 are monitoring devices that detect the physical state of the door 302, including whether the door 302 is open, closed, forced open without authorization, or held open beyond a permitted duration.

The access controllers 301 are intermediate processing units that receive credential data from the access reader modules 304 and state information from the door sensors 308, and that issue lock and unlock commands to the door locks 303. Each access controller 301 manages one or more door assemblies and applies locally stored access rules to determine whether to grant or deny access based on the presented credentials. The access controllers 301 communicate with the ACS server 305 through the network switch 306 via network connections 307. The network connections 307 encompass physical wires, such as RS-485 serial connections, Ethernet cables, or fiber optic links, as well as wireless communications links, such as Wi-Fi, Bluetooth, Zigbee, or cellular connections. The network switch 306 directs signals between the access controllers 301 and the ACS server 305 according to the network configuration of the ACS 300, enabling bidirectional communication for real-time access decisions, firmware updates, configuration changes, and event reporting.

The ACS server 305 is a centralized computing resource that manages the overall access control policy, stores access permissions for all persons authorized to enter the building, maintains audit logs of all access events, and coordinates the operation of the access controllers 301 across the building. In some aspects, the ACS server 305 is the same as, or communicatively coupled to, the cloud server 216 described with reference to FIG. 2, enabling the security analysis system 218 to receive access event data in real time. The ACS server 305 is connected to an end-user terminal or interface 309 through the network switch 306 and the network connections 307. The end-user terminal 309 is a computing device through which an administrator or security operator configures access permissions, reviews access event logs, monitors door status in real time, generates reports, and responds to alarms generated by the ACS 300. The end-user terminal 309 provides a graphical interface presenting maps of the building with door status indicators, tables of recent access events, and configuration panels for defining access schedules, permission groups, and alert thresholds.

In operation, the ACS 300 is configured to grant or deny access to a controlled or secured area based on credential verification. A person 310 approaches the access reader module 304 and presents credentials, such as an access card, a mobile device with a digital credential, or a biometric identifier. The access reader module 304 reads the presented credentials to extract a card identifier, user identifier, or biometric template associated with the person 310. The extracted identifier is transmitted from the access reader module 304 to the access controller 301, which evaluates the identifier against a stored access policy to determine whether the person 310 has permission to enter the controlled area at the current time and under the current conditions. If permission is confirmed, the access controller 301 commands the door lock 303 to transition to an unlocked state, permitting the person 310 to open the door 302. If permission is denied, the door lock 303 remains in the locked state and the access controller 301 logs a denied-access event. In each case, the access controller 301 reports the access event - whether granted, denied, or anomalous - to the ACS server 305, which forwards the event data to the security analysis system 218 for correlation with the video data stream and incorporation into the context used for surveillance rule generation.

The integration of the ACS 300 with the present disclosure enables the context inference engine to incorporate access control event data as an additional input modality alongside the video, audio, and metadata components of the data stream. For example, when a door forced open (DFO) event is detected by the door sensors 308 concurrently with a visual anomaly in the video data stream at the same access point, the system generates a surveillance rule or detects a security event with higher confidence than would be achievable from either data source alone. Similarly, when the access reader module 304 reports a sequence of denied-access attempts at a particular door 302, the context inference engine correlates this information with observed pedestrian behavior in the surveillance data stream to determine whether a security event such as a forced entry attempt or unauthorized probing is occurring. The ACS 300 thereby functions as both an independent access enforcement mechanism and as a data source that enriches the contextual foundation upon which the AI based LVLM generates and applies surveillance rules.

The ACS 300 is not limited to the particular arrangement of components depicted in FIG. 3. The ACS 300 encompasses any system, subsystem, or collection of cooperating hardware and software elements that governs physical or logical access to a space, zone, asset, or resource. In some aspects, the ACS 300 operates as a standalone local system within a single building. In other aspects, the ACS 300 spans multiple buildings, campuses, or geographically distributed sites and communicates with a centralized or federated management platform. The ACS 300 is equally applicable to interior doors, exterior doors, vehicle entry points, elevator access, parking structure gates, loading docks, rooftop hatches, laboratory entry points, clean-room airlocks, server room cages, and any other controlled boundary. The hierarchical structure shown - field devices connected to access controllers 301, access controllers 301 connected through a network switch 306 to an ACS server 305 - represents one configuration; the present disclosure also encompasses flat architectures in which field devices communicate directly with the ACS server 305, peer-to-peer architectures in which access controllers 301 coordinate without a central server, and hybrid architectures combining any of the foregoing. Regardless of architecture, the ACS 300 generates access event data that the security analysis system 218 consumes as an input modality alongside the video data stream for context inference and surveillance rule generation.

Referring to FIG. 4, a system 400 for generating video surveillance rules is shown according to an aspect of the present disclosure. The system 400 represents the core computational architecture through which the present disclosure achieves automated, context-aware surveillance rule generation. Whereas conventional surveillance platforms require a human operator to manually define detection rules for each camera and each environment - a process that scales linearly with the number of deployed cameras and that demands specialized security expertise - the system 400 receives a data stream from one or more cameras 424, applies an AI based Large Vision-Language Model (LVLM) to analyze the content of that data stream, autonomously determines the context of the monitored environment, and generates one or more surveillance rules tailored to that context without requiring manual rule configuration. The system 400 subsequently applies the generated surveillance rules on the data stream to detect a security event and generates alerts to appropriate personnel via a user interface 426. This end-to-end pipeline - from raw data ingestion through context inference, rule generation, event detection, and alert delivery - operates continuously and adapts as the monitored environment changes, enabling consistent and scalable security monitoring across any number of cameras and locations.

Referring to FIG. 5, a detailed view of selected components of the system 400 is shown according to an aspect of the present disclosure. FIG. 5 depicts the context inference engine 412 as an inference engine including a GPU hosting an LVLM with a state-of-the-art LVLM architecture comprising an image encoder, a tokenization and embedding layer, a projection layer, and a large language model (LLM) backbone that produces text tokens and image output. FIG. 5 further depicts a rule generation engine 500 that corresponds to the rule generation engine 414 of FIG. 4 and is shown in greater structural detail, including a prompt generator, a rule storage component, and a session manager. For consistency throughout this specification, the rule generation engine continues to be referred to as element 414 when discussed in a system-level context and as element 500 when discussed specifically with reference to the detailed architecture of FIG. 5. FIG. 5 further depicts a communication interface 414 implemented as a Protobuf or REST API interface layer between the inference engine 412 and the rule generation engine 500, enabling modular deployment in which the inference engine 412 and the rule generation engine 500 operate on the same hardware or on separate computing resources connected over a network. Additionally, FIG. 5 details the user interface 426, which includes a rule display component, a text input component, an image input component, a chat window, a speech input component, and a file input component.

FIGS. 4 and 5 are described in combination below, with FIG. 5 providing additional detail on the internal structure of the context inference engine 412, the rule generation engine 500, and the user interface 426 shown at a higher level of abstraction in FIG. 4.

In an example implementation, the system 400 includes a communication interface 402, a processing circuit 404, and a database 420. The system 400 operates as an on-premises system, a remote system, a cloud-based system, or a hybrid system combining on-premises and cloud resources. The communication interface 402 includes wired or wireless interfaces (e.g., jacks, antennas, transmitters, receivers, transceivers, wire terminals) for conducting data communications with various systems, devices, or networks. For example, the communication interface 402 includes an Ethernet card and port for sending and receiving data via an Ethernet-based communications network, a Wi-Fi transceiver for communicating via a wireless communications network, a cellular modem, a fiber optic interface, or any combination thereof. The communication interface 402 communicates via local area networks, wide area networks (e.g., the Internet, a building WAN), or any suitable network topology, and uses a variety of communication protocols (e.g., BACnet, IP, LON, MQTT, AMQP, HTTP/HTTPS, gRPC).

The communication interface 402 is a network interface configured to facilitate electronic data communications between the system 400 and various external systems or devices, including one or more cameras 424, the user interface 426, the ACS server 305 of FIG. 3, the cloud server 216 of FIG. 2, and any other security-relevant data source. The communication interface 402 supports bidirectional data flow, receiving incoming data streams from the cameras 424 and transmitting outgoing alerts, commands, and display data to the user interface 426 and other connected devices.

The processing circuit 404 includes a processor 406 and a memory 408. The processor 406 is a general purpose or specific purpose processor, an application specific integrated circuit (ASIC), one or more field programmable gate arrays (FPGAs), a graphics processing unit (GPU), a tensor processing unit (TPU), a neural processing unit (NPU), a digital signal processor (DSP), a system-on-chip (SoC), a group of processing components, or other suitable processing components. As shown in FIG. 5, the context inference engine 412 utilizes a GPU for accelerated inference of the LVLM. The processor 406 is configured to execute computer code or instructions stored in the memory 408 or received from other computer readable media (e.g., network storage, a remote server, a container registry, etc.).

As used in the context of FIG. 2 and throughout the present disclosure, the security system 200 includes, but is not limited to, any coordinated arrangement of hardware, software, communication links, and data processing resources that collectively monitor, analyze, and respond to security-relevant conditions across one or more environments. The security system 200 encompasses centralized architectures in which a single platform performs all analysis, distributed architectures in which analysis is shared among edge and cloud resources, federated architectures in which independent subsystems contribute data to a common analysis layer, and hybrid architectures that combine elements of each. Examples include, without limitation, enterprise security operations centers, managed security service provider platforms, multi-tenant cloud-based monitoring services, municipal surveillance networks, campus-wide safety systems, and integrated physical-cyber security platforms.

Each of the security systems 202a-202d includes, but is not limited to, any local or site-level computing resource, device, or collection of devices that aggregates, processes, stores, or relays data from building subsystems 204 at a respective monitored environment. The security systems 202a-202d encompass dedicated security panel controllers, general-purpose servers running security software, edge computing appliances, embedded processors within cameras or sensors, network video recorders, building automation controllers repurposed for security data aggregation, and virtualized workloads running on shared infrastructure. Examples include, without limitation, a rack-mounted security server in a building's IT closet, a ruggedized edge gateway mounted in a mechanical room, a containerized microservice executing on a network-attached storage device, firmware executing on a smart camera's onboard processor, and a software agent deployed on a building management system controller.

The building subsystems 204 include, but are not limited to, any collection of sensors, actuators, controllers, and associated infrastructure that produce data or execute actions relevant to security, safety, or operational awareness within a monitored environment. The building subsystems 204 are not limited to the fire safety subsystems 206 and security subsystems 208 depicted in FIG. 2 and further encompass HVAC systems, lighting control systems, elevator and escalator systems, intercom and public address systems, parking management systems, visitor management systems, point-of-sale systems, environmental monitoring systems (e.g., air quality, temperature, humidity), utility metering systems, and any other data-producing system whose output is relevant to detecting, analyzing, or responding to security events.

The fire safety subsystems 206 include, but are not limited to, any collection of sensors, detectors, alarms, suppression devices, and control panels configured to detect, signal, or respond to fire-related or atmosphere-related hazards within a monitored environment. Examples include, without limitation, photoelectric and ionization smoke detectors, heat detectors (fixed-temperature and rate-of-rise), carbon monoxide detectors, combustible gas detectors, flame detectors (UV, IR, and multi-spectrum), manual pull stations, audible and visual alarm notification appliances, sprinkler systems, clean agent suppression systems, kitchen hood suppression systems, and fire alarm control panels that aggregate and report events.

The security subsystems 208 include, but are not limited to, any collection of systems that monitor, control, or record physical security conditions within or around a monitored environment. The security subsystems 208 include the surveillance system 210, the entry system 212, and the intrusion system 214, and further encompass any other subsystem whose primary function relates to physical security monitoring or enforcement. The surveillance system 210 includes, but is not limited to, any arrangement of imaging devices, recording devices, and processing systems that capture, store, and analyze visual or multispectral data from one or more monitored areas. Examples include analog CCTV systems, IP camera networks, network video recorders, video management software platforms, body-worn camera systems, drone-mounted cameras, thermal imaging arrays, and any combination thereof. The entry system 212 includes, but is not limited to, any system configured to regulate, monitor, or record the passage of persons or objects through controlled access points. Examples include badge-based card readers, biometric scanners (fingerprint, facial recognition, iris, palm vein), PIN keypads, mobile credential readers (NFC, BLE, UWB), turnstiles, speed gates, barrier arms, revolving doors, mantrap airlocks, vehicle gate controllers, and visitor management kiosks. The intrusion system 214 includes, but is not limited to, any system configured to detect unauthorized physical penetration of a secured boundary or zone. Examples include door and window contact sensors, glass break detectors, passive infrared (PIR) motion detectors, dual-technology motion detectors (PIR plus microwave), vibration sensors, seismic sensors, fence-mounted strain sensors, laser beam detectors, video analytics configured for virtual tripwire or zone crossing, and arming/disarming keypads and control panels.

The cloud server 216 includes, but is not limited to, any remote or centralized computing platform that receives, stores, processes, and distributes security-related data and analysis results. The cloud server 216 is not limited to a single physical machine and encompasses any arrangement of computing resources that performs the described functions, including a single dedicated server, a cluster of load-balanced servers, one or more virtual machines, a container orchestration platform, a serverless function-as-a-service environment, or any hybrid combination. The cloud server 216 operates on infrastructure that is off-premises (hosted by a third-party cloud provider), on-premises (located within one of the buildings 100a-100d), or in a hybrid deployment combining both. Examples of hosting environments include, without limitation, Amazon Web Services, Microsoft Azure, Google Cloud Platform, private OpenStack deployments, co-located server racks in commercial data centers, and on-premises server rooms within enterprise facilities.

The security analysis system 218 includes, but is not limited to, any software, firmware, or hardware module, or collection thereof, executing on the cloud server 216 that performs aggregation, correlation, pattern recognition, anomaly detection, rule generation, event classification, alert prioritization, false alarm suppression, or automated response generation based on data received from the security systems 202a-202d. The security analysis system 218 includes the interface system 220, the alarm analysis system 222, and the historical security data 224, and further encompasses any additional analytical, machine learning, or decision-support module that processes security data. Examples include LVLM-based context inference engines, convolutional neural network-based video analytics, natural language processing modules for report generation, statistical correlation engines, graph-based relationship analyzers, reinforcement learning agents for adaptive alert thresholds, and compliance verification engines.

The interface system 220 includes, but is not limited to, any software or hardware component that generates, formats, and delivers information from the security analysis system 218 to one or more user devices 226, and that receives input from the user devices 226 for configuring, controlling, or querying the security system 200. The interface system 220 encompasses web application servers, API gateways, push notification services, email and SMS delivery modules, voice synthesis engines, dashboard rendering engines, map visualization layers, and report generation modules. The alarm analysis system 222 includes, but is not limited to, any analytical engine or collection of engines that evaluates raw or preprocessed security data to identify, classify, correlate, prioritize, or suppress alarms and events. Examples include rule-based event correlation engines, machine learning classifiers trained on historical alarm data, Bayesian inference networks, time-series anomaly detectors, and cross-site pattern matching algorithms that identify coordinated events across multiple buildings 100a-100d.

The historical security data 224 includes, but is not limited to, any persistent repository of security-related information accumulated over time from the security systems 202a-202d. The historical security data 224 encompasses alarm records, event logs, video recordings, still image archives, audio recordings, access control transaction logs, sensor readings, metadata streams, analysis results, user interaction logs, configuration change histories, and any derived data products such as statistical summaries, trend reports, or trained model parameters. The historical security data 224 is stored in any suitable data storage technology including, without limitation, relational databases, NoSQL document stores, time-series databases, object storage systems, data lakes, distributed file systems, and in-memory caching layers.

The user devices 226 include, but are not limited to, any computing endpoint through which a human operator, administrator, automated system, or third-party integration receives information from, or provides input to, the security system 200. Examples include smartphones, tablets, laptop computers, desktop workstations, dedicated security monitoring terminals, wall-mounted touchscreen displays, smart watches, augmented reality headsets, virtual reality headsets, smart glasses, voice-activated assistants, in-vehicle displays, and programmatic API clients. The user devices 226 interact with the interface system 220 through any communication channel including web browsers, native applications, progressive web applications, command-line interfaces, voice commands, gesture recognition, and machine-to-machine API calls.

The network 228 includes, but is not limited to, any communication infrastructure, medium, or protocol stack that enables data exchange among the components of the security system 200. The network 228 encompasses wired networks (Ethernet, fiber optic, coaxial, powerline), wireless networks (Wi-Fi, cellular including 4G LTE and 5G NR, Bluetooth, ZigBee, Z-Wave, LoRa, LoRaWAN, Sigfox, satellite, mmWave point-to-point links), and any combination thereof. The network 228 operates using any suitable protocol or combination of protocols including, without limitation, TCP/IP, UDP, HTTP, HTTPS, MQTT, AMQP, CoAP, WebSocket, BACnet, LonWorks, Modbus, OPC UA, and proprietary protocols. The network 228 includes any intermediate infrastructure such as routers, switches, modems, gateways, firewalls, load balancers, VPN concentrators, proxy servers, and content delivery networks. The network 228 operates as a local area network, a wide area network, a metropolitan area network, a virtual private network, an overlay network, a mesh network, or any topology or combination of topologies suitable for connecting the security systems 202a-202d to the cloud server 216 and the user devices 226.

As used throughout the present disclosure in relation to the security analysis system 218, a database includes, but is not limited to, any organized collection of data stored in a persistent or semi-persistent medium and accessible by one or more components of the security system 200 for reading, writing, querying, or analysis. The database encompasses relational database management systems (e.g., PostgreSQL, MySQL, Microsoft SQL Server, Oracle Database), NoSQL databases (e.g., MongoDB, Cassandra, DynamoDB, Couchbase), time-series databases (e.g., InfluxDB, TimescaleDB), graph databases (e.g., Neo4j, Amazon Neptune), key-value stores (e.g., Redis, Memcached), object storage services (e.g., Amazon S3, Azure Blob Storage), distributed file systems (e.g., HDFS, GlusterFS), and in-memory data grids. The database stores the historical security data 224, surveillance rules generated by the security analysis system 218, configuration parameters, user preferences, trained model weights, and any other data supporting the operation of the security system 200.

As used throughout the present disclosure, a user interface includes, but is not limited to, any mechanism, system, or presentation layer through which a human user perceives information from, or provides input to, the security system 200. The user interface encompasses graphical user interfaces (GUIs) rendered on displays of the user devices 226, voice-based interfaces that accept spoken commands and provide audible responses, gesture-based interfaces that interpret hand, body, or eye movements, text-based interfaces such as command-line tools or chatbots, and haptic interfaces that convey information through tactile feedback. The user interface includes interactive maps displaying building layouts and camera positions, real-time video feeds with overlaid surveillance rule indicators, alarm dashboards presenting prioritized alerts, natural language conversation panels for refining surveillance rules, drag-and-drop rule builders, timeline views of historical events, and administrative configuration screens. In some aspects, the user interface adapts its presentation based on the capabilities of the user device 226, the role of the user, or the urgency of the information being conveyed.

The memory 408 includes one or more devices (e.g., memory units, memory devices, storage devices) for storing data and computer code for completing and facilitating the various processes described in the present disclosure. The memory 408 includes random access memory (RAM), read-only memory (ROM), hard drive storage, solid-state storage, temporary storage, non-volatile memory, flash memory, optical memory, or any other suitable memory for storing software objects and computer instructions. The memory 408 includes database components, object code components, script components, trained model weight files, configuration parameters, modules, or any other type of information structure for supporting the various activities and information structures described in the present disclosure. The memory 408 is communicably connected to the processor 406 via the processing circuit 404 and includes computer code for executing (e.g., by the processor 406) one or more processes described herein.

The system 400 receives one or more data streams from the one or more cameras 424 via the communication interface 402. The cameras 424 include, without limitation, red-green-blue (RGB) cameras, infrared cameras, thermal cameras, depth cameras, pan-tilt-zoom (PTZ) cameras, fisheye cameras, 360-degree cameras, multispectral cameras, body-worn cameras, and drone-mounted cameras. The camera 424 is, in some aspects, an edge camera having local processing capability. Each camera 424 observes a building space, an outdoor area, or any other monitored environment falling within its field of view and captures a data stream of a region of interest. The data stream includes, but is not limited to, a plurality of image frames or video data, audio data, and associated metadata (e.g., timestamps, camera identifiers, geolocation coordinates, motion vectors, resolution parameters). In some aspects, the camera 424 determines the region of interest within its field of view based on motion detection, operator configuration, or instructions received from the system 400. Alternatively, the entire field of view of the camera 424 is considered the region of interest. The camera 424 captures the data stream and transmits the captured data stream to the system 400 via the communication interface 402.

As used herein, the term "data stream" includes, but is not limited to, a continuous or discrete flow of data captured by one or more cameras 424 and transmitted to the system 400. The data stream may include, without limitation, video data comprising a plurality of image frames, still image data, audio data, and associated metadata such as timestamps, camera identifiers, camera location information, encryption information, and resolution information. In some aspects, the data stream may be a live data stream received in real-time from the cameras 424. In other aspects, the data stream may be a recorded data stream retrieved from storage for playback or retrospective analysis.

The system 400 is communicatively coupled to the user interface 426 (e.g., via the communication interface 402). The user interface 426 accesses the data streams as captured by the cameras 424 for playback and analysis. In some aspects, the user interface 426 is accessible on an electronic device associated with a user, including but not limited to wearable devices (e.g., optical head-mounted displays, smart glasses, smartwatches), smartphones and mobile devices, desktop computers, laptop and netbook computing devices, tablet computing devices, digital media devices, personal digital assistants (PDAs), dedicated multi-monitor security workstations, wall-mounted touchscreens, voice-activated assistants, augmented reality (AR) or virtual reality (VR) headsets, and any other device having communication and processing capabilities. In some aspects, the user interface 426 is associated with a user such as an administrator of the building space, security personnel, a building owner, a facility manager, or any other authorized individual.

The system 400 includes a data stream receiver 410. The data stream receiver 410 communicates with the one or more cameras 424 via the communication interface 402 to receive one or more data streams captured by the one or more cameras 424. In some aspects, the data stream receiver 410 receives timestamped data streams from the cameras 424 indicating the time of capture of the data stream. The data stream receiver 410 also receives additional information such as encryption information (if applicable), camera information (such as a camera identifier, camera location, camera orientation, lens parameters), network routing information, and any other suitable information pertaining to the data stream. The data stream receiver 410 aggregates, buffers, and routes the received data streams to the context inference engine 412 for analysis, enabling continuous processing even when multiple cameras 424 transmit concurrently.

The system 400 includes a context inference engine 412, alternatively referred to as inference engine 412. The context inference engine 412 communicates with the data stream receiver 410 to receive the data stream. The context inference engine 412 performs image processing operations on the received data streams prior to or as part of the context determination process. The image processing operations include one or more of segmentation of the data stream into one or more data frames to identify a region of interest, image resizing, image cropping, noise reduction, contrast enhancement, color normalization, text extraction via optical character recognition (OCR), feature detection, boundary detection, object detection, pixel normalization, and frame deduplication. These preprocessing operations prepare the data stream for efficient and accurate analysis by the LVLM, reducing computational overhead and improving inference accuracy.

In some aspects, the context inference engine 412 segments the data stream into one or more sections such as audio data, video data, and metadata associated with the data stream. This segmentation enables the context inference engine 412 to apply specialized analysis techniques to each modality - for example, applying visual object detection to image frames, applying audio classification to audio segments, and applying timestamp and geolocation correlation to metadata - before combining the results into a unified context determination.

As shown in FIG. 5, the context inference engine 412 includes a GPU hosting an LVLM. The LVLM includes a state-of-the-art LVLM architecture comprising an image encoder that extracts visual features from image frames, a tokenization and embedding layer that converts textual input into token representations, a projection layer that aligns visual features from the image encoder with the text token embeddings to create a unified multimodal representation, and a large language model (LLM) backbone that processes the combined representation and generates text tokens as output and, in some aspects, image output. The LVLM analyzes aspects and content of the data stream - including visual objects (such as vehicles, persons, equipment, furniture, signage), audio data (such as gunshot detection, glass breaking, raised voices), textual data (such as sign boards, labels, posted notices), metadata (such as timestamps, camera identifiers), actions, spatial relationships, and location indicators (such as airports, hospitals, warehouses) - to determine the context of the data stream. In some aspects, the context indicates scene attributes pertaining to the data stream, the scene attributes comprising one or more of scene location, scene type, environmental condition at the scene location, presence of objects in the scene, behavior of objects and their relation with other objects, and time of day.

As used herein, the term "Large Vision-Language Model" or "LVLM" includes, but is not limited to, a multimodal artificial intelligence model that is configured to process and reason over both visual data (e.g., images, video frames) and textual data (e.g., natural language prompts, scene descriptions) to generate contextually relevant outputs. In some aspects, the LVLM may comprise an image encoder configured to extract visual features from the data stream, a text tokenization and embedding layer configured to convert textual input into token representations, a projection layer configured to align visual features with text token embeddings, and a large language model (LLM) backbone configured to generate output based on the combined visual and textual representations. The LVLM may be a pre-trained model that is fine-tuned on domain-specific training data relevant to security and surveillance applications. In some aspects, the LVLM may be hosted on a GPU-equipped inference engine for accelerated processing of the data stream. In some aspects, the LVLM communicates with downstream components such as the rule generation engine 414 via communication protocols including, but not limited to, Protocol Buffers (Protobuf) or REST API.

The system 400 includes a rule generation engine 414, further detailed in FIG. 5. The rule generation engine 414 communicates with the context inference engine 412 via a Protobuf or REST API interface layer to obtain context related information associated with the data stream. This API-based communication layer enables modular deployment in which the context inference engine 412 and the rule generation engine 414 operate on the same hardware, on separate hardware within the same network, or on different computing resources connected over a wide area network. The rule generation engine 414 applies machine learning techniques offered by the AI based LVLM that are trained to understand the context and generate one or more surveillance rules relevant to the context associated with the data stream. In some aspects, the machine learning techniques utilize training data such as policy documents pertaining to a building space equipped with the camera, predefined training data obtained from a user, predefined training data gathered from third-party sources, historical security event data from the database 420, and compliance requirements applicable to the monitored environment. The rule generation engine 414 generates surveillance rules tailored to specific scenes and camera locations, accounting for different compliance requirements, threat profiles, and operational needs that vary by location.

As used herein, the term "surveillance rules" includes, but is not limited to, machine-generated or user-defined conditional criteria that, when applied to a data stream, enable detection of a security event. The surveillance rules may take the form of natural language prompts, logical expressions, or structured queries. Non-limiting examples of surveillance rules include: "is there any unattended bag or package in the area," "is there any suspicious behavior or activity," "is there any unauthorized access," "is there sufficient security personnel deployed in the area," "is the person wearing a high-visibility vest," "is the person wearing a protective headgear," "is the person wearing a badge or an identification tag," "is there a person who appears to be in distress," "is there a person who has fallen," "is fire detected," and "is smoke detected." The surveillance rules may be context-specific, meaning that different sets of surveillance rules may be generated for different scene types (e.g., airport, hospital, warehouse, office building, parking lot) and/or different camera locations within a scene.

In one example, the rule generation engine 414 obtains context related information from the context inference engine 412 indicating that the scene depicted in the data stream is from an airport (a busy location) along with additional information such as a timestamp, a scene location (a specific area of the airport based on camera location), and applicable security policies. Based on such context related information, the rule generation engine 414 generates one or more rules that apply to the airport-related scenario. As shown in FIG. 5, the rule generation engine 500 includes a prompt generator that formulates the surveillance rules as natural language prompts, such as: "is there any unattended bag or package in the area," "is there any suspicious behavior or activity," "is there any unauthorized access to a restricted zone," "is there sufficient security personnel deployed in the area," and "are the posted security policies being followed." These natural language prompts enable non-technical personnel to review, understand, and refine the surveillance rules without specialized programming knowledge. As further shown in FIG. 5, the rule generation engine 500 includes a rule storage component that stores the generated surveillance rules associated with a specific context in the database 420 for future reference, enabling rapid redeployment of proven rule sets when the same context is encountered at the same or a different camera location. The rule generation engine 500 further includes a session manager that tracks and manages user interaction with the system 400 via the user interface 426, maintaining conversational state across multiple refinement exchanges so that each subsequent user input builds upon prior context rather than requiring the user to restate previously communicated preferences.

The system 400 includes an event detector 416 that communicates with the rule generation engine 414 to obtain the one or more surveillance rules generated. The event detector 416 analyzes different portions of the data stream to determine whether any of the surveillance rules applies, thereby detecting a security event. In some aspects, the security event indicates detection of an object, identification of a person, recognition of an occurrence or situation that constitutes a security threat, identification of a policy violation, or any other condition that satisfies one or more of the surveillance rules. The event detector 416 generates one or more alerts on an electronic device via the user interface 426 subsequent to detection of the security event. The electronic device belongs to appropriate personnel such as an administrator of the system 400, security personnel, a facility manager, or any other designated recipient. The event detector 416 applies the surveillance rules continuously to the data stream, enabling real-time detection without requiring a human operator to visually monitor the camera feeds.

In some aspects, the system 400 operates as a continuous adaptive loop. A change condition causes the processing circuit 404 to update the context determined by the context inference engine 412. The change condition comprises one or more of: detection of a security event by the event detector 416 (for example, detection of smoke in a previously clear environment changes the context from a normal operational state to an emergency state); expiration of a periodic re-evaluation interval (for example, the system 400 re-analyzes the data stream every configurable period to detect gradual changes such as furniture rearrangement after a renovation, seasonal lighting changes, or repositioning of cameras); introduction of a new data source into the data stream (for example, when a new camera or sensor is installed, replaced, or repositioned, the system 400 detects the new data characteristics and re-evaluates context accordingly); an update to supplemental context data stored in the database 420 (for example, when a policy document, safety regulation, standardization requirement, or compliance standard is revised or newly uploaded by a user); or a determination that the context has changed beyond a threshold (for example, the content of the data stream has changed sufficiently relative to a previously stored context profile, indicating a significant physical change to the monitored environment). In each case, the updated context triggers the rule generation engine 414 to generate one or more additional surveillance rules responsive to the new context - for example, rules monitoring whether emergency exits are clear and whether evacuation is proceeding in an orderly manner. This feedback mechanism enables the system 400 to iteratively refine surveillance coverage without requiring manual reconfiguration by an operator. The adaptive loop operates continuously during system operation, enabling the system 400 to respond to evolving conditions in the monitored environment in near real-time and ensuring that the system's surveillance rules remain suitable and useful to the user as conditions evolve over the lifetime of the deployment.

As used herein, the term "security event" includes, but is not limited to, any occurrence or condition detected within the data stream that may indicate a potential security threat, safety hazard, policy violation, or anomalous activity. Non-limiting examples of security events include detection of unattended baggage, unauthorized access to restricted areas, persons in distress, persons who have fallen, fire or smoke detection, suspicious behavior, absence of required personal protective equipment, and failure to display required identification credentials. A security event may be detected by applying one or more surveillance rules to the data stream and determining that one or more conditions specified by the surveillance rules are satisfied.

For example, the rule generation engine 414 generates a surveillance rule such as "is there any unattended baggage in the area." The event detector 416 applies this surveillance rule on the data stream by analyzing successive portions of the data stream to identify any unattended baggage that satisfies the rule condition, indicating a security event. Upon detecting the unattended baggage (i.e., a security event), an alert is automatically generated and transmitted to the electronic device associated with appropriate personnel. Because the event detector 416 applies the surveillance rules programmatically and continuously across all frames of the data stream, detection occurs without the latency, fatigue, or inconsistency inherent in manual human monitoring.

In some aspects, subsequent to generation of the surveillance rules, a user refines the rules by providing inputs via the user interface 426. As shown in FIG. 5, the user interface 426 includes various components to allow the user to interact with the system 400. A rule display component allows the user to view the one or more surveillance rules generated by the rule generation engine 500, providing transparency into the system's automated decisions and enabling the user to accept, modify, or reject individual rules. A speech input component allows the user to provide verbal input in the form of voice commands to interact with the system 400, enabling hands-free operation in environments where the user is simultaneously attending to other tasks. A text input component allows the user to provide inputs in the form of text messages via a chat window, initiating a natural language conversation with the system 400. The natural language conversation comprises one or more exchanges in which the user provides input via one or more of text, speech, and image, and a session manager maintains conversational state across the one or more exchanges such that the one or more surveillance rules are progressively refined without requiring the user to restate previously communicated context. An image input component allows the user to input one or more images for the system 400 to analyze and generate additional surveillance rules or detect security events. A file input component allows the user to provide inputs in the form of files for the system 400 to analyze. The files comprise supplemental context data including, without limitation, policy documents, safety regulations, standardization requirements (e.g., OSHA, ISO, NFPA standards), building diagrams, site layouts, floor plans, CAD designs, equipment specifications, operational procedures, compliance frameworks, staffing schedules, and any other reference material pertaining to the building space associated with the camera. In some aspects, the supplemental context data is stored in the database 420. The supplemental context data indicates compliance policies, security policies, scheduling information, planned activities, staffing requirements, environmental safety standards, and operational procedures to be implemented in the building space (e.g., occupants must wear their ID badges visibly at all times). Based on such supplemental context data, the rule generation engine 414 generates a surveillance rule such as "is the occupant wearing an ID badge," and in the case where the occupant is not wearing the ID badge, the event detector 416 generates an alert to relevant security personnel or the administrator of the building space. The system 400 thereby provides the user with the ability to modify the surveillance rules as per requirement, and the system 400 applies the modified surveillance rules on the data stream to detect a security event. In some aspects, user preferences pertaining to the surveillance rules are stored in the database 420 for persistence across sessions.

The system 400 thus provides three complementary pathways for determining context and generating surveillance rules. In a first pathway, the context inference engine 412 derives context directly from the data stream captured by the camera 424, analyzing visual, audio, textual, and metadata content derived therefrom to automatically infer the environment, scene type, and conditions without external input (as described with reference to FIGS. 4 and 5). In a second pathway, a user provides supplemental context data to the system 400 via the file input component of the user interface 426, the supplemental context data comprising one or more of policy documents, safety regulations, standardization requirements, building diagrams, site layouts, CAD designs, compliance frameworks, and operational procedures pertaining to the building space; the rule generation engine 414 generates or refines surveillance rules based on the supplemental context data in combination with context derived from the data stream. In a third pathway, a user interacts with the system 400 through a natural language conversation via the chat window, text input component, or speech input component to generate, refine, or fine-tune surveillance rules based on conversational input; the session manager maintains state across multiple exchanges such that each subsequent input builds upon prior context. These three pathways operate independently or in any combination, with the system 400 synthesizing context from all available inputs to generate surveillance rules that reflect both automated scene understanding and user-specified requirements. The supplemental context data of the second pathway is distinct from the data stream of the first pathway: the data stream comprises sensor-derived real-time data captured by the camera 424, while the supplemental context data comprises user-provided or system-retrieved reference material used persistently throughout the lifetime of the system 400 to inform rule generation.

In another aspect, a data stream is analyzed by the context inference engine 412 to determine the context - for example, the presence of a visual object such as personal protective equipment (PPE) placed on a table in the data stream indicates a work environment where PPE compliance is relevant. Based on such context information, the rule generation engine 414 generates surveillance rules such as "is the person wearing a high-visibility vest," "is the person wearing a protective headgear," and "is the person wearing a badge or an identification tag." The event detector 416 analyzes the data stream based on these surveillance rules and generates one or more alerts for transmitting to an electronic device belonging to relevant personnel such as an administrator, building owner, or security personnel. The surveillance rules are generated automatically by the system 400 based on the inferred context, enabling detection of PPE compliance violations without requiring the user to manually define PPE-related rules for each camera location.

In another aspect, a data stream is analyzed by the context inference engine 412 to determine the context - for example, a hospital environment based on visual cues such as medical equipment, uniforms, and signage. Based on the context, the rule generation engine 414 determines one or more surveillance rules such as "is the person wearing a uniform or badge" and "is the person wearing a face mask, cap, or any other PPE." A user provides input via the text input component of the user interface 426 - for example, typing "what about people falling" in the chat window. Such input initiates a natural language conversation between the system 400 and the user via the session manager of the rule generation engine 414. Based on such user preferences, the rule generation engine 414 refines the previously generated surveillance rules to adapt to the requirement of the user and generates modified surveillance rules such as "is there a person who appears to be in distress" and "is there a person who has fallen." The user selects any of the modified surveillance rules to implement, or the event detector 416 of the system 400 automatically applies the one or more modified surveillance rules on the data stream to detect a security event. This interactive refinement loop - in which the system 400 generates initial rules from context and the user refines them through natural language dialog - enables site-specific customization that adapts the system's behavior to the unique operational requirements of each monitored environment.

In a further aspect, a data stream is analyzed by the context inference engine 412 to determine the context - for example, a fire situation based on detection of smoke, flames, or elevated heat signatures in the visual data. Based on the context, the rule generation engine 414 generates one or more surveillance rules such as "is there any unauthorized access to the room" and "is there any damage to the equipment." A user provides input via the text input component - for example, typing "what about potential fire threat" in the chat window. Based on such user input, the rule generation engine 414 refines the previously generated surveillance rules to adapt to the user's requirement and provides modified surveillance rules such as "is there any smoking or open flames in the room," "are emergency exits clear and unobstructed," and "is evacuation proceeding in an orderly manner." The user selects any of the modified surveillance rules to implement, or the event detector 416 of the system 400 automatically applies the one or more modified surveillance rules on the data stream to detect a security event. The ability to combine context-derived rules with user-specified refinements enables the system 400 to address both predictable and unanticipated threats within a single, cohesive rule set.

While FIGS. 4 and 5 depict a particular arrangement of functional blocks and subcomponents, the system 400 is not limited to the specific topology, partitioning, or module boundaries shown. The system 400 encompasses any arrangement in which a processing resource receives a data stream, determines context from the data stream, generates one or more surveillance rules based on the context, and applies the surveillance rules to the data stream to detect a security event - regardless of how the constituent functions are allocated across hardware, software, firmware, or any combination thereof. The communication interface 402, the processing circuit 404, the data stream receiver 410, the context inference engine 412, the rule generation engine 414, the event detector 416, the database 420, and the user interface 426 represent functional roles rather than fixed physical boundaries. Any two or more of these components operate as a single integrated module, and any single component is decomposed into multiple cooperating sub-modules distributed across separate computing resources. The system 400 operates as a monolithic application executing on a single device, as a set of microservices deployed in containers across a cluster, as a serverless pipeline invoked on demand, or as any hybrid thereof. The partitioning shown in FIG. 4 and the subcomponent detail shown in FIG. 5 are therefore representative and not restrictive.

Referring to FIG. 6, a snapshot 600 of the user interface 426 is shown as rendered within a web browser application on an electronic device. The snapshot 600 presents an operational view of the system 400 in which an administrator or security operator configures data stream sources, manages surveillance rules, and interacts with the AI-based rule generation capabilities of the present disclosure. By consolidating stream configuration, rule management, and AI-driven rule generation into a single unified interface, the snapshot 600 enables an operator to configure and monitor the system 400 without navigating between separate applications or requiring specialized technical knowledge, thereby reducing configuration time and lowering the barrier to effective deployment of the system 400 across diverse building environments.

In an example implementation, the snapshot 600 includes a stream configuration panel positioned on a left portion of the interface. The stream configuration panel includes a camera IP address input field that accepts a network address identifying a particular camera 424 from which the system 400 receives a data stream. A stream select dropdown control enables the operator to select from among multiple available data streams when the system 400 is communicatively coupled to more than one camera 424. A start video stream button initiates the data stream reception by the data stream receiver 410, causing the system 400 to begin receiving and processing the data stream from the selected camera 424. The stream configuration panel thus provides a direct mechanism for an operator to establish connectivity between the system 400 and any camera 424 deployed within the monitored environment, without requiring command-line configuration or modification of system files.

The snapshot 600 further includes a rule configuration panel that displays one or more surveillance rules currently active or available within the system 400. Each surveillance rule is presented as a row within a table having a rule column identifying the surveillance rule text and a status column indicating the current operational state of that surveillance rule. The status of each surveillance rule is conveyed through a visual status indicator. For example, in the snapshot 600, a first surveillance rule reading "Is fire detected?" is associated with a first status indicator (depicted as a circle with a cross symbol), and a second surveillance rule reading "Is smoke detected?" is associated with a second status indicator having a different visual appearance (depicted as a circle with a diagonal line). The distinct visual indicators enable an operator to distinguish at a glance between surveillance rules in different operational states - for example, rules that have been triggered or are in an alert condition versus rules that are inactive or have not detected a matching event - providing immediate situational awareness without requiring the operator to navigate into detail views for each individual rule.

Below the rule configuration panel, the snapshot 600 includes a rule entry section providing two distinct pathways for populating the surveillance rules managed by the system 400. An add rules manually button enables an operator to define surveillance rules based on the operator's own knowledge and preferences, while a generate rules using AI button invokes the context inference engine 412 and the rule generation engine 414 to automatically analyze the data stream, determine context, and generate one or more surveillance rules relevant to the context, as described with reference to FIGS. 4 and 5. The dual-pathway approach allows the system 400 to accommodate both operators who prefer direct manual control over rule creation and operators who prefer to leverage the AI-based capabilities of the present disclosure for automated rule generation, or any combination of both approaches.

The rule entry section further includes a text input field labeled "Enter new rule" for typing a new surveillance rule in natural language, an add new rule button for submitting the entered rule to the rule generation engine 500, and a clear button for resetting the input field. A chat window area within the rule entry section provides a conversational interface through which the operator initiates a natural language conversation with the system 400 to refine, modify, or expand the surveillance rules, as managed by the session manager component of the rule generation engine 500 described with reference to FIG. 5. A speech input control depicted as a microphone icon and a file input control are also accessible from the rule entry section, enabling the operator to provide verbal commands or upload supplemental context data such as policy documents, safety regulations, and building diagrams for the system 400 to analyze and incorporate into the surveillance rule generation process. A camera icon within the snapshot 600 represents a video preview area where the data stream from the selected camera 424 is displayed, enabling the operator to visually confirm the monitored scene while configuring and reviewing surveillance rules.

Referring to FIG. 7, a method 700 for generating video surveillance rules is shown. The method 700 provides a procedural representation of the operations performed by the system 400 described with reference to FIGS. 4 and 5. The method 700 is performed by the processing circuit 404, or by any other computing system, controller, or combination of distributed processing resources of the building security system described with reference to FIGS. 1 through 3. By encoding the core operational pipeline of the present disclosure as a sequence of defined steps, the method 700 enables consistent, repeatable execution of automated surveillance rule generation across any deployment of the system 400, regardless of the specific hardware or software configuration implementing the processing circuit 404.

In an example implementation, the method 700 includes receiving one or more data streams from the cameras 424 (step 702). The data stream receiver 410 of the processing circuit 404 receives the one or more data streams via the communication interface 402. Each data stream includes one or more of video data, audio data, still image data, and associated metadata. The metadata includes timestamps indicating the time of capture, camera identifiers, camera location information (e.g., geolocation coordinates, building zone designations), encryption status, lens parameters, and any other information pertaining to the data stream or the camera 424 that captured it. When multiple cameras 424 are deployed, the data stream receiver 410 concurrently receives and manages data streams from each camera 424, enabling the system 400 to process surveillance data from multiple vantage points within the monitored environment.

The method 700 further includes analyzing the data stream by applying an AI based Large Vision-Language Model (LVLM) to determine context (step 704). The context inference engine 412 of the processing circuit 404 receives the data stream from the data stream receiver 410 and applies one or more image processing operations to prepare the data stream for analysis. The image processing operations include one or more of segmentation of the data stream into individual data frames, image resizing, image cropping, noise reduction, contrast enhancement, text extraction via optical character recognition, feature detection, boundary detection, pixel normalization, frame deduplication, object detection, background subtraction, and color normalization. The context inference engine 412 further segments the data stream into constituent sections - including video data, audio data, and metadata - to enable per-modality specialized analysis. The AI based LVLM analyzes the content of the data stream, including visual objects (e.g., vehicles, persons, equipment, furniture, signage), audio data (e.g., glass breaking, raised voices, alarms, gunshot-like sounds), textual data (e.g., sign boards, labels, identification badges), metadata, actions, spatial relationships, temporal patterns, and environmental indicators, to determine the context of the data stream. The context indicates one or more scene attributes pertaining to the data stream, including scene location, scene type, environmental conditions at the scene location, presence and classification of objects in the scene, behaviors of objects and their relationships with other objects, and time of day. Because the context inference engine 412 derives the context directly from the data stream content rather than from pre-programmed labels or manual operator input, the method 700 adapts to new environments without requiring per-location reconfiguration.

The method 700 further includes generating one or more surveillance rules based on the context of the data stream (step 706). The rule generation engine 414 of the processing circuit 404 receives the context from the context inference engine 412 and applies machine learning techniques offered by the AI based LVLM to generate one or more surveillance rules relevant to the determined context. The machine learning techniques are trained to understand the context and produce surveillance rules that are specific to the scene, location, and operational conditions reflected in the data stream. The rule generation engine 414 utilizes a prompt generator to formulate the surveillance rules as natural language prompts, structured queries, or other machine-interpretable directives. The generated surveillance rules are stored by a rule storage component of the rule generation engine 414 in the database 420 for future reference, retrieval, and reuse. In aspects where user refinement is desired, the method 700 further includes receiving user preferences via the user interface 426 and modifying the one or more surveillance rules accordingly. A session manager of the rule generation engine 414 tracks the interaction between the user and the system 400 across multiple exchanges, enabling progressive refinement of the surveillance rules through a natural language conversation without requiring the user to restate previously communicated preferences.

The method 700 further includes applying the one or more surveillance rules on the data stream to detect a security event (step 708). The event detector 416 of the processing circuit 404 obtains the one or more surveillance rules from the rule generation engine 414 and continuously analyzes successive portions of the data stream to determine whether any surveillance rule condition is satisfied. When the event detector 416 identifies a portion of the data stream that satisfies one or more of the surveillance rules, the event detector 416 determines that a security event has occurred. The security event indicates one or more of detection of a specific object, identification of a person, recognition of a behavior, occurrence of an environmental condition, violation of a policy, satisfaction of a threshold, or any other condition specified by the surveillance rules. Subsequent to detection of the security event, the processing circuit 404 generates one or more alerts and transmits the one or more alerts to an electronic device via the user interface 426 for review by appropriate personnel such as a security administrator or building operator. The method 700 thus provides an end-to-end automated pipeline from data stream ingestion through context-aware rule generation to real-time event detection and alert delivery, reducing the need for continuous human visual monitoring while maintaining adaptability to diverse and evolving monitored environments.

The snapshot 600, as depicted in FIG. 6, represents one possible visual presentation of the user interface 426 and is not restrictive of the layout, arrangement, visual styling, or interaction paradigm employed by the present disclosure. The user interface 426 presents the same functional capabilities - stream configuration, rule display, rule status indication, manual rule entry, AI-driven rule generation, conversational refinement, speech input, file input, and video preview - in any arrangement, any number of panels or pages, any color scheme or monochrome rendering, any typographic convention, and through any rendering technology including web applications, native desktop applications, native mobile applications, progressive web applications, terminal-based interfaces, voice-only interfaces, and augmented or virtual reality environments. The specific controls depicted (IP address field, dropdown menus, buttons, text fields, chat panels) represent functional affordances; any equivalent user interaction mechanism that accomplishes the same function - including gesture controls, voice commands, API calls, drag-and-drop operations, context menus, keyboard shortcuts, and automated triggers - falls within the scope of the present disclosure.

The stream configuration functionality shown in the snapshot 600 encompasses any mechanism by which the system 400 identifies, connects to, and begins receiving a data stream from one or more cameras 424 or other sensing devices. The stream configuration is not limited to manual entry of an IP address and selection from a dropdown list. In various aspects, the system 400 discovers available cameras automatically via network scanning, device discovery protocols (e.g., ONVIF, UPnP, mDNS, LLDP), pre-configured device registries, building management system integrations, or cloud-based device provisioning platforms. The system 400 accepts any connection parameter - including URLs, URIs, device identifiers, serial numbers, MAC addresses, multicast group addresses, stream keys, authentication tokens, and certificate-based identities - through any input mechanism. Starting a data stream encompasses initiating a live connection, resuming a paused stream, replaying a recorded stream, subscribing to a pub/sub topic, polling a storage location, or any other action that causes data to flow from a sensing device to the data stream receiver 410.

The rule configuration panel and the status indicators depicted in the snapshot 600 represent one visual approach to displaying surveillance rules and their operational states. The present disclosure encompasses any method of presenting rule identity, rule content, and rule status to a user, including tabular layouts, card-based layouts, list views, tree structures, graph-based visualizations, timeline-based representations, voice-based announcements, haptic feedback, and programmatic API responses. The status indicators are not limited to colored circles or any particular visual encoding; status is conveyed through any distinguishable visual attribute (shape, size, pattern, fill, position, animation, icon, badge, border, opacity), auditory attribute (tone, pitch, frequency, spoken status), or data attribute (numeric code, text label, boolean flag) that communicates whether a rule is active, inactive, triggered, paused, pending review, or in any other defined state. Multiple rules are grouped, filtered, sorted, searched, tagged, categorized, or hierarchically organized in any manner that facilitates operator comprehension and efficient management of potentially large rule sets.

The dual-pathway approach - providing both a manual rule entry option and an AI-driven rule generation option - represents one aspect of the user interface 426. The present disclosure encompasses any number of rule creation pathways operating individually or in combination. In some aspects, a third pathway allows importing rules from external sources such as other installations of the system 400, third-party rule libraries, industry-standard compliance templates, or exported configuration files. In other aspects, the AI-driven pathway operates without user initiation, automatically generating and applying rules as the context inference engine 412 processes new data streams. The manual and AI pathways are not mutually exclusive; the system 400 supports hybrid workflows in which AI-generated rules are presented for manual editing before activation, manually created rules are enhanced or validated by the AI, or both pathways contribute rules simultaneously that are merged, deduplicated, and prioritized by the rule generation engine 414. Any trigger mechanism - button press, voice command, scheduled automation, API call, event-driven hook, or system startup - initiates either pathway.

The method 700 depicted in FIG. 7 represents one procedural sequencing of the operations performed by the system 400. The present disclosure is not limited to the specific ordering of steps 702, 704, 706, and 708 as depicted. In various aspects, one or more steps execute concurrently rather than sequentially - for example, the event detector 416 applies previously generated surveillance rules to the data stream (step 708) while the context inference engine 412 simultaneously analyzes a different portion of the same data stream to update or generate additional surveillance rules (steps 704 and 706). Steps are repeated iteratively, with each cycle refining the context determination or generating additional surveillance rules based on newly observed data. The method 700 operates as a continuous loop rather than a single-pass sequence, with each step feeding back into preceding steps - for example, a detected security event (step 708) updating the context (step 704), which triggers generation of additional surveillance rules (step 706). Sub-steps within each depicted step are performed in any order, in parallel, or conditionally based on the results of prior sub-steps.

Step 702 of the method 700 - receiving one or more data streams - encompasses any mechanism by which data flows from a sensing device to the processing circuit 404, regardless of transport protocol, data format, intermediary processing, or temporal mode. The data stream is received in real time as a live feed, retrieved on demand from local or remote storage, streamed from a buffer or queue, obtained via polling, delivered via push notification, subscribed to via a pub/sub broker, or made available through any other data delivery mechanism. Step 702 is not limited to receiving data from a single camera and encompasses concurrent reception from any number of heterogeneous sensing devices, with the data stream receiver 410 performing any necessary protocol translation, format conversion, decryption, decompression, buffering, reordering, de-duplication, quality assessment, or load balancing prior to forwarding the data stream to the context inference engine 412.

Step 704 of the method 700 - analyzing the data stream to determine context - encompasses any analytical technique, model, algorithm, or process that derives contextual understanding from data, regardless of whether the analysis is performed by a single model or a pipeline of models, whether the model is a transformer, CNN, RNN, diffusion model, graph neural network, neuro-symbolic system, or any other architecture, and whether the analysis occurs on a GPU, TPU, CPU, FPGA, or any other processing element. The image processing operations performed prior to or during context determination are not limited to the specific operations enumerated and include any signal processing, data transformation, augmentation, filtering, encoding, or feature extraction step that prepares or enhances the data stream for analysis. Context determination is not limited to a single inference pass and encompasses iterative refinement, multi-scale analysis, hierarchical inference, attention-based focus mechanisms, and progressive disclosure of contextual detail as additional data stream portions are received.

Step 706 of the method 700 - generating one or more surveillance rules - encompasses any process that transforms contextual information into machine-interpretable criteria for event detection, regardless of whether the rules are formulated as natural language prompts, Boolean logic, structured queries, decision trees, neural network configurations, threshold parameters, temporal logic expressions, executable code, or any other representation. Rule generation is not limited to a single model invocation and encompasses multi-step pipelines in which a first model proposes candidate rules, a second model validates or ranks the candidates, and a third model refines the selected rules. The generated rules are stored, transmitted, applied immediately, queued for later application, or any combination thereof. User refinement of generated rules - whether through natural language conversation, direct text editing, graphical manipulation, voice command, or programmatic API interaction - is encompassed within step 706 regardless of the specific interaction modality or the number of refinement iterations.

Step 708 of the method 700 - applying the surveillance rules to detect a security event - encompasses any evaluation mechanism that determines whether conditions specified by the surveillance rules are satisfied within the data stream, regardless of temporal granularity (frame-level, clip-level, session-level), analytical approach (rule matching, neural classification, statistical anomaly detection, temporal logic evaluation, threshold comparison, pattern recognition), or processing mode (real-time, near-real-time, batch, on-demand). The event detection is not limited to analyzing the data stream from a single camera and encompasses cross-camera correlation, multi-modal fusion, sequential reasoning across temporally separated observations, and aggregate analysis across multiple concurrent data streams. The alerts generated upon security event detection are not limited to visual notifications and encompass any output action including audible alarms, electronic messages (email, SMS, push notification, instant message), webhook callbacks, API calls to third-party systems, automated physical control actions (door locking, lighting activation, camera repositioning, alarm siren activation), integration with dispatch systems, and any combination of concurrent alert actions with configurable priority, escalation, and suppression logic.

The construction and arrangement of the systems and methods as shown in the various exemplary aspects are illustrative only. Although only a few aspects have been described in detail in this disclosure, many modifications are possible (e.g., variations in sizes, dimensions, structures, shapes and proportions of the various elements, values of parameters, mounting arrangements, use of materials, colors, orientations, etc.). For example, the position of elements can be reversed or otherwise varied and the nature or number of discrete elements or positions can be altered or varied. Accordingly, all such modifications are intended to be included within the scope of the present disclosure. The order or sequence of any process or method steps can be varied or re-sequenced according to alternative aspects. Other substitutions, modifications, changes, and omissions can be made in the design, operating conditions and arrangement of the exemplary aspects without departing from the scope of the present disclosure.

The present disclosure contemplates methods, systems and program products on any machine-readable media for accomplishing various operations. The aspects of the present disclosure can be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

Although the figures show a specific order of method steps, the order of the steps may differ from what is depicted. Also two or more steps can be performed concurrently or with partial concurrence. Such variation will depend on the software and hardware systems chosen and on designer choice. All such variations are within the scope of the disclosure. Likewise, software implementations could be accomplished with standard programming techniques with rule based logic and other logic to accomplish the various connection steps, processing steps, comparison steps and decision steps.

The present disclosure may be implemented according to one or more of the following clauses. Any of these embodiments can be claimed in a separate claim, e.g. by substituting the word "Clause" by "Claim", in particular in the order as mentioned below and/or in any combination with any embodiment described above or with any of the features of the attached claims:
Clause 1. A system comprising: a processing circuit to: receive a data stream from a camera; analyze the data stream by utilizing an AI based Large Vision-Language Model (LVLM) to determine context; generate one or more surveillance rules based on the context of the data stream; and apply the one or more surveillance rules on the data stream to detect a security event.
Clause 2. The system of any preceding clause, wherein the processing circuit performs one or more image processing operations comprising segmentation of the data stream into one or more data frames to identify a region of interest, image resizing, image cropping, noise reduction in data stream, contrast enhancement, text extraction, feature detection, boundary detection, and pixel normalization on the data stream.
Clause 3. The system of any preceding clause, wherein the context indicates scene attributes pertaining to the data stream, the scene attributes comprising one or more of scene location, scene type, environmental condition at the scene location, presence of objects in the scene, behavior of objects and relation with other objects, time of the day.
Clause 4. The system of any preceding clause, wherein the AI based LVLM analyzes one or more of textual data, visual data, audio data, and metadata derived from the data stream to determine the context.
Clause 5. The system of any preceding clause, wherein the processing circuit initiates a natural language conversation with a user via a user interface to refine the one or more surveillance rules, the natural language conversation comprising one or more exchanges in which the user provides input via one or more of text, speech, and image, and wherein a session manager maintains conversational state across the one or more exchanges such that the one or more surveillance rules are progressively refined without requiring the user to restate previously communicated context.
Clause 6. The system of any preceding clause, wherein the processing circuit modifies the one or more surveillance rules as per user preferences obtained via a user interface.
Clause 7. A method comprising: receiving, by a processing circuit, a data stream from a camera; analyzing, by the processing circuit, the data stream by applying an AI based Large Vision-Language Model (LVLM) to determine context; generating, by the processing circuit, one or more surveillance rules based on the context of the data stream; and applying, by the processing circuit, the one or more surveillance rules on the data stream to detect a security event.
Clause 8. The method of any preceding clause, wherein the context indicates scene attributes pertaining to the data stream, the scene attributes comprising one or more of scene location, scene type, environmental condition at the scene location, presence of objects in the scene, behavior of objects and relation with other objects, time of the day.
Clause 9. The method of any preceding clause, further comprising: generating, by the processing circuit, one or more alerts upon detection of the security event; and transmitting, by the processing circuit, the one or more alerts to an electronic device.
Clause 10. The method of any preceding clause, further comprising: modifying, by the processing circuit, the one or more surveillance rules as per user preferences obtained via a user interface; and applying, by the processing circuit, the modified surveillance rules on the data stream to detect a security event.
Clause 11. The method of any preceding clause, further comprising: performing, by the processing circuit, one or more image processing operations on the data stream prior to analyzing the data stream, the one or more image processing operations comprising one or more of segmentation of the data stream into one or more data frames, image resizing, image cropping, noise reduction, contrast enhancement, text extraction, feature detection, boundary detection, and pixel normalization.
Clause 12. The method of any preceding clause, further comprising: storing, by the processing circuit, the one or more surveillance rules in a database associated with the context of the data stream for future reference.
Clause 13. The system or method of any preceding clause, wherein the processing circuit stores the one or more surveillance rules in a database associated with the context of the data stream for future reference.
Clause 14. The system or method of any preceding clause, wherein the processing circuit comprises a context inference engine, and wherein the context inference engine performs one or more image processing operations on the data stream prior to analyzing the data stream, the one or more image processing operations comprising segmentation of the data stream into one or more sections including audio data, video data, and metadata associated with the data stream.
Clause 15. The system or method of any preceding clause, wherein the processing circuit comprises a rule generation engine, and wherein the rule generation engine comprises a prompt generator configured to generate the one or more surveillance rules in the form of natural language prompts.
Clause 16. The system or method of any preceding clause, wherein the processing circuit receives supplemental context data comprising one or more of a policy document, a safety regulation, a standardization requirement, a building diagram, a site layout, and a CAD design pertaining to a building space associated with the camera and generates the one or more surveillance rules further based on the supplemental context data.
Clause 17. A non-transitory computer-readable medium storing instructions that, when executed by a processing circuit, cause the processing circuit to perform a method according to any of the preceding or following clauses, in particular to: receive a data stream from a camera; analyze the data stream by utilizing an AI based Large Vision-Language Model (LVLM) to determine context; generate one or more surveillance rules based on the context of the data stream; and apply the one or more surveillance rules on the data stream to detect a security event.
Clause 18. The system or method of any preceding clause, wherein the processing circuit initiates a natural language conversation with a user via the user interface to refine the one or more surveillance rules based on user input.
Clause 19. The system or method of any preceding clause, wherein the camera is one or more of an RGB camera, an infrared camera, a depth camera, and a PTZ camera.
Clause 20. The system or method of any preceding clause, wherein the LVLM comprises an image encoder, a text tokenization and embedding layer, a projection layer, and a large language model (LLM) backbone.
Clause 21. The system or method of any preceding clause, wherein the processing circuit comprises a context inference engine including the LVLM, and wherein the LVLM comprises an image encoder configured to extract visual features from data frames of the data stream, a projection layer configured to align the visual features with text token embeddings into a unified multimodal representation, and a large language model (LLM) backbone configured to process the unified multimodal representation to generate a context output, wherein the projection layer performs a learned linear or nonlinear transformation that maps visual feature vectors from a latent space of the image encoder into a latent space of the LLM backbone.
Clause 22. The system or method of any preceding clause, wherein a change condition causes the processing circuit to update the context, the change condition comprising one or more of detection of the security event, expiration of a periodic re-evaluation interval, introduction of a new data source into the data stream, an update to supplemental context data stored in a database associated with the system, or a determination that the context has changed beyond a threshold, and wherein the updated context triggers the processing circuit to generate one or more additional surveillance rules, such that the system operates as a continuous adaptive loop without requiring manual reconfiguration.
Clause 23. The method or system of any preceding clause, wherein a change condition causes the processing circuit to re-analyze the data stream to update the context, the change condition comprising one or more of detection of the security event, expiration of a periodic re-evaluation interval, introduction of a new data source into the data stream, an update to supplemental context data stored in a database, or a determination that the context has changed beyond a threshold, and wherein the updated context triggers generation of one or more additional surveillance rules without operator intervention, such that the method iteratively refines surveillance coverage responsive to the change condition.

## Claims

1. A system comprising:
a processing circuit to:
receive a data stream from a camera;
analyze the data stream by utilizing an AI based Large Vision-Language Model (LVLM) to determine context;
generate one or more surveillance rules based on the context of the data stream; and
apply the one or more surveillance rules on the data stream to detect a security event.

2. The system of claim 1, wherein the processing circuit performs one or more image processing operations comprising segmentation of the data stream into one or more data frames to identify a region of interest, image resizing, image cropping, noise reduction in data stream, contrast enhancement, text extraction, feature detection, boundary detection, and pixel normalization on the data stream.

3. The system of claim 1 or 2, wherein the context indicates scene attributes pertaining to the data stream, the scene attributes comprising one or more of scene location, scene type, environmental condition at the scene location, presence of objects in the scene, behavior of objects and relation with other objects, time of the day.

4. The system of any of claims 1 to 3, wherein the AI based LVLM analyzes one or more of textual data, visual data, audio data, and metadata derived from the data stream to determine the context.

5. The system of any of claims 1 to 4, wherein the processing circuit initiates a natural language conversation with a user via a user interface to refine the one or more surveillance rules, the natural language conversation comprising one or more exchanges in which the user provides input via one or more of text, speech, and image, and wherein a session manager maintains conversational state across the one or more exchanges such that the one or more surveillance rules are progressively refined without requiring the user to restate previously communicated context.

6. The system of any of claims 1 to 5, wherein the processing circuit modifies the one or more surveillance rules as per user preferences obtained via a user interface; and/or wherein the processing circuit stores the one or more surveillance rules in a database associated with the context of the data stream for future reference.

7. The system of any of claims 1 to 6, wherein the processing circuit comprises a context inference engine, and wherein the context inference engine performs one or more image processing operations on the data stream prior to analyzing the data stream, the one or more image processing operations comprising segmentation of the data stream into one or more sections including audio data, video data, and metadata associated with the data stream; and/or
wherein the processing circuit comprises a rule generation engine, and wherein the rule generation engine comprises a prompt generator configured to generate the one or more surveillance rules in the form of natural language prompts; and/or
wherein the processing circuit comprises a context inference engine including the LVLM, and wherein the LVLM comprises an image encoder configured to extract visual features from data frames of the data stream, a projection layer configured to align the visual features with text token embeddings into a unified multimodal representation, and a large language model (LLM) backbone configured to process the unified multimodal representation to generate a context output, wherein the projection layer performs a learned linear or nonlinear transformation that maps visual feature vectors from a latent space of the image encoder into a latent space of the LLM backbone.

8. The system of any of claims 1 to 7, wherein the processing circuit receives supplemental context data comprising one or more of a policy document, a safety regulation, a standardization requirement, a building diagram, a site layout, and a CAD design pertaining to a building space associated with the camera and generates the one or more surveillance rules further based on the supplemental context data.

9. The system of any of claims 1 to 8, wherein a change condition causes the processing circuit to update the context, the change condition comprising one or more of detection of the security event, expiration of a periodic re-evaluation interval, introduction of a new data source into the data stream, an update to supplemental context data stored in a database associated with the system, or a determination that the context has changed beyond a threshold, and wherein the updated context triggers the processing circuit to generate one or more additional surveillance rules, such that the system operates as a continuous adaptive loop without requiring manual reconfiguration.

10. A method comprising:
receiving, by a processing circuit, a data stream from a camera;
analyzing, by the processing circuit, the data stream by applying an AI based Large Vision-Language Model (LVLM) to determine context;
generating, by the processing circuit, one or more surveillance rules based on the context of the data stream; and
applying, by the processing circuit, the one or more surveillance rules on the data stream to detect a security event.

11. The method of claim 10, wherein the context indicates scene attributes pertaining to the data stream, the scene attributes comprising one or more of scene location, scene type, environmental condition at the scene location, presence of objects in the scene, behavior of objects and relation with other objects, time of the day.

12. The method of claim 10 or 11, further comprising:
generating, by the processing circuit, one or more alerts upon detection of the security event; and
transmitting, by the processing circuit, the one or more alerts to an electronic device.

13. The method of any of claims 10 to 12, further comprising:
modifying, by the processing circuit, the one or more surveillance rules as per user preferences obtained via a user interface; and applying, by the processing circuit, the modified surveillance rules on the data stream to detect a security event; and/or
further comprising:
storing, by the processing circuit, the one or more surveillance rules in a database associated with the context of the data stream for future reference.

14. The method of any of claims 10 to 13, further comprising:
performing, by the processing circuit, one or more image processing operations on the data stream prior to analyzing the data stream, the one or more image processing operations comprising one or more of segmentation of the data stream into one or more data frames, image resizing, image cropping, noise reduction, contrast enhancement, text extraction, feature detection, boundary detection, and pixel normalization; and/or
wherein a change condition causes the processing circuit to re-analyze the data stream to update the context, the change condition comprising one or more of detection of the security event, expiration of a periodic re-evaluation interval, introduction of a new data source into the data stream, an update to supplemental context data stored in a database, or a determination that the context has changed beyond a threshold, and wherein the updated context triggers generation of one or more additional surveillance rules without operator intervention, such that the method iteratively refines surveillance coverage responsive to the change condition.

15. A non-transitory computer-readable medium storing instructions that, when executed by a processing circuit, cause the processing circuit to perform the method of any of claims 10 to 14, in particular to:
receive a data stream from a camera;
analyze the data stream by utilizing an AI based Large Vision-Language Model (LVLM) to determine context;
generate one or more surveillance rules based on the context of the data stream; and
apply the one or more surveillance rules on the data stream to detect a security event.
